# EUROPEAN PATENT APPLICATION

(11) **EP 4 726 229 A1**
(43) Date of publication of application: **15.04.2026**
(21) Application number: 24819136.3
(22) Date of filing: 20.05.2024
(51) Int. Cl.: F16C 32/04, F16C 41/00, H02K 7/09

(54) **BEARINGLESS MOTOR**

(30) Priority: 07.06.2023 JP 2023094383
(71) Applicant: Panasonic Intellectual Property Management Co., Ltd., Kadoma-shi, Osaka 571-0057 (JP)
(72) Inventor: TAKAHARA Kazuaki, Osaka 571-0057 (JP); MORIMOTO Eiki, Osaka 571-0057 (JP); SUZUKI Kenta, Osaka 571-0057 (JP); MIYAKE Takafumi, Osaka 571-0057 (JP); AOKI Yuji, Osaka 571-0057 (JP); OGAWA Yoshiki, Osaka 571-0057 (JP)
(74) Representative: SSM Sandmair
(86) International application number: PCT/JP2024/018468
(87) International publication number: WO 2024/252903

(57) **Abstract**

Provided is a bearingless motor in which it is easy to actively generate a restoring torque against inclination of a rotor. A bearingless motor (1) includes a motor (2), a magnetic bearing (3), a first controller, and a second controller. The motor (2) is a radial gap motor including a first rotor (21) and a first stator (22) that rotate about an axis (100) along a Z-axis direction of an orthogonal coordinate system having an X-axis, a Y-axis, and a Z-axis. The magnetic bearing (3) includes a second rotor (31) and a second stator (32) that rotate about an axis (100). The first rotor (21) and the second rotor (31) are disposed at different positions in the Z-axis direction and are integrally coupled to each other to constitute a rotor unit (10). The first controller controls a position of the first rotor (21) in an X-axis direction, a position of the first rotor (21) in a Y-axis direction, an inclination of the first rotor (21) about the X-axis, and an inclination of the first rotor (21) about the Y-axis. The second controller controls the position of the second rotor (31) in the Z-axis direction.

## Description

### TECHNICAL FIELD

The present disclosure relates to a bearingless motor. More particularly, the present disclosure relates to a bearingless motor having a motor and a magnetic bearing.

### BACKGROUND ART

Patent Literature 1 discloses a bearingless motor. The bearingless motor disclosed in Patent Literature 1 is a so-called two-axis control type bearingless motor, and has a function of an electric motor that generates torque and a function of a magnetic bearing that generates a supporting force for levitating a rotor in a non-contact manner in one magnetic circuit. In order to levitate the rotor, it is necessary to provide a stable structure in five degrees of freedom excluding the rotation axis.

In a two-axis control type bearingless motor, a position is detected by a sensor only in a radial direction of a rotor, and a supporting force is adjusted so that the detected position coincides with a target position. That is, the two-axis control type bearingless motor performs active control only in the radial direction. The radial direction is two directions of the X-axis direction and the Y-axis direction.

In general, the two-axis control type bearingless motor does not actively control the axial direction and the inclination direction of the rotor, and has a passively stable structure.

In order to passively stabilize the rotor, the attractive force between the permanent magnets of the rotor and the iron core of the stator is used. For example, when the rotor is inclined, an attractive force acts between the permanent magnet of the rotor and the iron core of the stator so as to return the inclination of the rotor. As a result, the restoring torque is generated in the direction opposite to the direction in which the rotor is inclined without performing the control. Similarly, when the rotor moves in the axial direction, a restoring force acts in a direction opposite to the direction in which the rotor moves.

In the two-axis control type bearingless motor, the control in the radial direction affects the stability in the inclination direction of the rotor. Since the line of action of the radial supporting force of the rotor does not pass through the center of gravity of the rotor, the radial supporting force also acts as a moment that tilts the rotor. This is used to actively control the tilt as well as the radial position of the rotor by means of the support windings.

### Citation List

### Patent Literature

Patent Literature 1: WO 2022/224381

### SUMMARY OF THE INVENTION

In the bearingless motor described in Patent Literature 1, when the rotor is displaced in the axial direction or the inclination direction, a positive spring force is generated by a force of attracting the permanent magnet and the iron, and a restoring force and a restoring torque are generated so that the axial direction and the inclination direction of the rotor become passively stable. Furthermore, the moment that tilts the rotor, which is generated when the line of action of the supporting force in the radial direction of the rotor does not pass through the center of gravity of the rotor, is used to actively damp the tilting direction.

However, when the rotor moves in the axial direction due to disturbance or the like and the line of action of the supporting force in the radial direction of the rotor passes through the center of gravity of the rotor, the supporting force in the radial direction does not act as a moment that tilts the rotor. Therefore, it is difficult to actively generate the restoring torque against the inclination of the rotor by actively controlling the supporting force in the radial direction. In addition, even when the rotor moves in the axial direction and the line of action of the radial supporting force of the rotor does not pass through the center of gravity of the rotor, if the length of the perpendicular drawn from the center of gravity to the line of action is not sufficient, the influence of the active restoring torque due to the moment at which the radial supporting force tilts the rotor is reduced.

An object of the present disclosure is to provide a bearingless motor in which it is easy to actively generate a restoring torque against an inclination of a rotor (rotor unit).

A bearingless motor according to an aspect of the present disclosure includes a motor, a magnetic bearing, a first controller, and a second controller. The motor is a radial gap motor including a first rotor and a first stator that rotate about an axis along a Z-axis direction of an orthogonal coordinate system having an X-axis, a Y-axis, and a Z-axis. The magnetic bearing includes a second rotor and a second stator that rotate about the axis. The first rotor and the second rotor are disposed at different positions in the Z-axis direction and are integrally coupled to each other to constitute a rotor unit. The first controller controls a position of the first rotor in the X-axis direction, a position of the first rotor in the Y-axis direction, an inclination of the first rotor about the X-axis, and an inclination of the first rotor about the Y-axis. The second controller controls a position of the second rotor in the Z-axis direction.

In the bearingless motor of the present disclosure, it is easy to actively generate a restoring torque with respect to the inclination of the rotor (rotor unit).

### BRIEF DESCRIPTION OF THE DRAWINGS

[FIG. 1A] FIG. 1A is a plan view of a bearingless motor according to a first embodiment of the present disclosure.
[FIG. 1B] FIG. 1B is a cross-sectional view taken along a plane including a Z axis of the bearingless motor according to the example embodiment of the first embodiment.
[FIG. 1C] FIG. 1C is a bottom view of the bearingless motor according to the example embodiment of the first embodiment.
[FIG. 2] FIG. 2 is a cross-sectional view of a first stator and a rotor unit in the bearingless motor of the first embodiment taken along a plane including a Z axis.
[FIG. 3] FIG. 3 is a plan view of a motor in the bearingless motor according to the first embodiment.
[FIG. 4] FIG. 4 is a cross-sectional view taken along a plane including a Z axis of the motor according to the first embodiment.
[FIG. 5] FIG. 5 is a block diagram of a first support device in the bearingless motor of the first embodiment.
[FIG. 6] FIG. 6 is a block diagram of a second support device in the bearingless motor of the first embodiment.
[FIG. 7] FIG. 7 is a cross-sectional view of a bearingless motor according to a second embodiment of the present disclosure taken along a plane including a Z axis.
[FIG. 8] FIG. 8 is a cross-sectional view of a bearingless motor according to a third embodiment of the present disclosure taken along a plane including a Z axis.
[FIG. 9A] FIG. 9A is a cross-sectional view of a bearingless motor according to a fourth embodiment of the present disclosure taken along a plane including a Z axis.
[FIG. 9B] FIG. 9B is a cross-sectional view of the second stator of the magnetic bearing in the bearingless motor according to the fourth embodiment.
[FIG. 10] FIG. 10 is a cross-sectional view of a bearingless motor according to a fifth embodiment of the present disclosure taken along a plane including a Z axis.
[FIG. 11] FIG. 11 is a cross-sectional view of a bearingless motor according to a sixth embodiment of the present disclosure taken along a plane including a Z axis.
[FIG. 12] FIG. 12 is a cross-sectional view of a bearingless motor according to a seventh embodiment of the present disclosure taken along a plane including a Z axis.
[FIG. 13] FIG. 13 is a cross-sectional view of a bearingless motor according to an eighth embodiment of the present disclosure taken along a plane including a Z axis.
[FIG. 14] FIG. 14 is a cross-sectional view of a bearingless motor according to a ninth embodiment of the present disclosure taken along a plane including a Z axis.
[FIG. 15] FIG. 15 is a cross-sectional view of a bearingless motor according to a tenth embodiment of the present disclosure taken along a plane including a Z axis.
[FIG. 16] FIG. 16 is a cross-sectional view of a bearingless motor according to an eleventh embodiment of the present disclosure taken along a plane including a Z axis.
[FIG. 17] FIG. 17 is a cross-sectional view of a bearingless motor according to a twelfth embodiment of the present disclosure taken along a plane including a Z axis.
[FIG. 18] FIG. 18 is a cross-sectional view of a bearingless motor according to a thirteenth embodiment of the present disclosure taken along a plane including the Z axis.
[FIG. 19] FIG. 19 is a cross-sectional view of a bearingless motor according to a fourteenth embodiment of the present disclosure taken along a plane including the Z axis.
[FIG. 20] FIG. 20 is a cross-sectional view of a bearingless motor according to a fifteenth embodiment of the present disclosure taken along a plane including the Z axis.
[FIG. 21] FIG. 21 is a plan view of a bearingless motor according to a sixteenth embodiment of the present disclosure.
[FIG. 22] FIG. 22 is a plan view of a bearingless motor according to a seventeenth embodiment of the present disclosure.
[FIG. 23A] FIG. 23A is a cross-sectional view of a bearingless motor according to an eighteenth embodiment of the present disclosure taken along a plane including a Z axis.
[FIG. 23B] FIG. 23B is a bottom view of the bearingless motor according to the eighteenth embodiment.
[FIG. 24A] FIG. 24A is a cross-sectional view of a bearingless motor according to a nineteenth embodiment of the present disclosure taken along a plane including the Z axis.
[FIG. 24B] FIG. 24B is a bottom view of the bearingless motor according to the nineteenth embodiment.
[FIG. 25] FIG. 25 is a cross-sectional view of a bearingless motor according to a twentieth embodiment of the present disclosure taken along a plane including the Z axis.
[FIG. 26] FIG. 26 is a cross-sectional view of a bearingless motor according to a twenty-first embodiment of the present disclosure taken along a plane including the Z axis.
[FIG. 27A] FIG. 27A is a cross-sectional view of a bearingless motor according to a twenty-second embodiment of the present disclosure taken along a plane including a Z axis.
[FIG. 27B] FIG. 27B is a bottom view of the bearingless motor according to the twenty-second example embodiment.
[FIG. 28A] FIG. 28A is a cross-sectional view of a bearingless motor according to a twenty-third embodiment of the present disclosure taken along a plane including a Z axis.
[FIG. 28B] FIG. 28B is a bottom view of the bearingless motor according to the twenty-second embodiment.
[FIG. 29A] FIG. 29A is a cross-sectional view of a bearingless motor according to a twenty-fourth embodiment of the present disclosure taken along a plane including the Z axis.
[FIG. 29B] FIG. 29B is a bottom view of the bearingless motor according to the twenty-fourth embodiment.
[FIG. 30A] FIG. 30A is a cross-sectional view of a bearingless motor according to a twenty-fifth embodiment of the present disclosure taken along a plane including the Z axis.
[FIG. 30B] FIG. 30B is a bottom view of the bearingless motor according to the twenty-fifth embodiment.
[FIG. 31A] FIG. 31A is a cross-sectional view of a bearingless motor according to a twenty-sixth embodiment of the present disclosure taken along a plane including a Z axis.
[FIG. 31B] FIG. 31B is a bottom view of the bearingless motor according to the twenty-sixth embodiment.
[FIG. 32A] FIG. 32A is a cross-sectional view of a bearingless motor according to a twenty-seventh embodiment of the present disclosure taken along a plane including a Z axis.
[FIG. 32B] FIG. 32B is a bottom view of the bearingless motor according to the twenty-seventh embodiment.
[FIG. 33A] FIG. 33A is a cross-sectional view of a bearingless motor according to a twenty-eighth embodiment of the present disclosure taken along a plane including the Z axis.
[FIG. 33B] FIG. 33B is a bottom view of the bearingless motor according to the twenty-eighth embodiment.

### DESCRIPTION OF EMBODIMENT

### (1) Overview

A bearingless motor according to the present disclosure will be described. The embodiments described below are merely some of various embodiments of the present disclosure, and various modifications can be made in the following embodiments according to design or the like as long as the object of the present disclosure can be achieved.

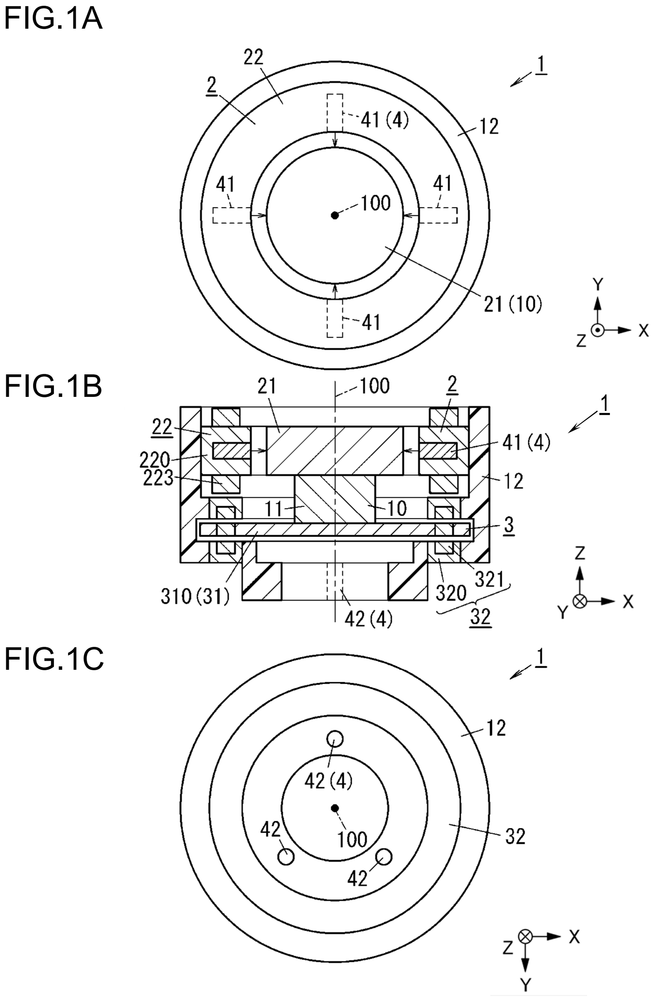

As illustrated in FIGS. 1A to 1C, bearingless motor 1 according to the present disclosure includes motor 2, magnetic bearing 3, a first controller, and a second controller. Motor 2 is a radial gap motor including first rotor 21 and first stator 22 that rotate about axis 100 along a Z-axis direction of an orthogonal coordinate system having an X-axis, a Y-axis, and a Z-axis. Magnetic bearing 3 includes second rotor 31 and second stator 32 that rotate about axis 100. First rotor 21 and second rotor 31 are disposed at different positions in the Z-axis direction and are integrally coupled to each other to constitute rotor unit 10. The first controller controls the position in the X-axis direction, the position in the Y-axis direction, the inclination around the X-axis, and the inclination around the Y-axis of first rotor 21. The second controller controls the position of second rotor 31 in the Z-axis direction.

In bearingless motor 1 according to the present disclosure, it is easy to actively generate the restoring torque with respect to the inclination of rotor unit 10 (first rotor 21 and second rotor 31).

### (2) First Embodiment

Hereinafter, bearingless motor 1 according to a first embodiment will be described with reference to FIGS. 1 to 6.

FIG. 1A is a plan view of bearingless motor 1 according to a first embodiment of the present disclosure. FIG. 1B is a cross-sectional view taken along a plane including the Z axis of bearingless motor 1 of the first embodiment. FIG. 1C is a bottom view of bearingless motor 1 according to the first embodiment. As illustrated in FIGS. 1A to 1C, bearingless motor 1 includes motor 2, magnetic bearing 3, a first controller that controls motor 2, a second controller that controls magnetic bearing 3, and position detector 4. Bearingless motor 1 of the first embodiment is a consequent-pole motor. Bearingless motor 1 is a three-phase AC motor. Bearingless motor 1 is supported by support member 12 formed of a case, a bracket, or the like.

### (2.1) Motor

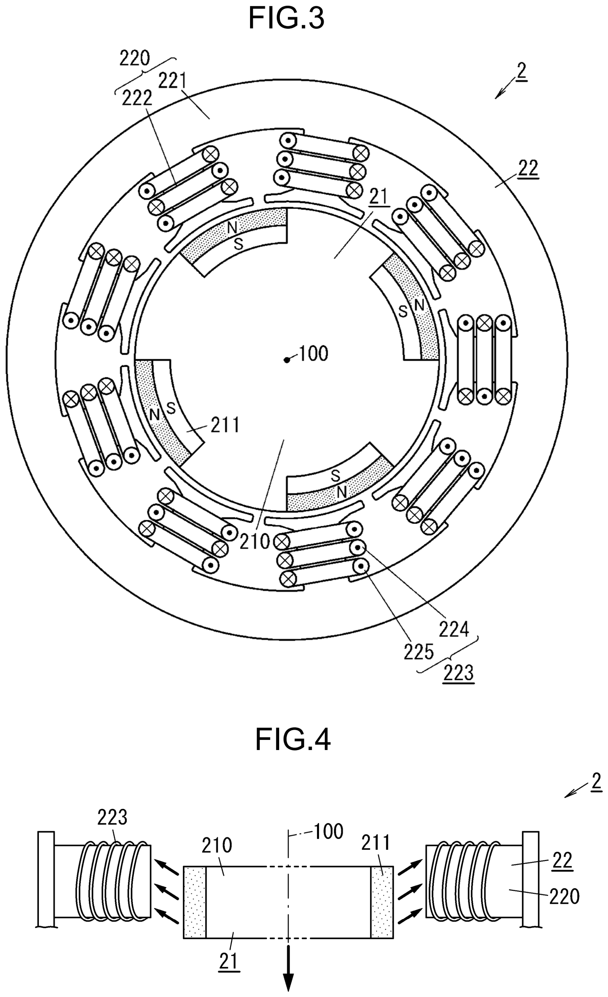

FIG. 3 is a plan view of motor 2 in bearingless motor 1 of the first embodiment. FIG. 4 is a cross-sectional view taken along a plane including the Z axis of motor 2 according to the first embodiment. As illustrated in FIGS. 3 and 4, motor 2 includes first rotor 21 and first stator 22. Motor 2 is a so-called radial gap motor. The main role of motor 2 is to generate torque and power of rotor unit 10 (first rotor 21) described later, which is an output of bearingless motor 1. A secondary role of motor 2 is to control the radial position and inclination of rotor unit 10 (first rotor 21). Motor 2 constitutes a main motor in bearingless motor 1. Motor 2 is controlled by the first controller.

### (2.1.1) First Rotor

First rotor 21 rotates about axis 100 along a Z-axis direction of an orthogonal coordinate system having an X-axis, a Y-axis, and a Z-axis, with the Z-axis serving as the axis of a rotation center. In the first embodiment, bearingless motor 1 is disposed such that the Z-axis direction and the vertical direction are parallel to each other.

First rotor 21 is constituted by a solid columnar member having a circular shape when viewed in the Z-axis direction. First rotor 21 is integrally attached to a rotating body (not shown) of an output destination, and transmits torque and power to the rotating body. First rotor 21 includes an annular rotor core 210 and a plurality of magnets 211. In the first embodiment, bearingless motor 1 is a consequent-pole motor, and a plurality of (four in the illustrated example) magnets 211 are provided at intervals in the circumferential direction around axis 100 of rotor core 210. The plurality of magnets 211 are provided in rotor core 210 such that the same pole (S pole in the illustrated example) is located on the side facing axis 100. Accordingly, on the surface of rotor core 210, an N pole is formed at a portion where magnet 211 is located in the circumferential direction around axis 100, and a portion between magnets 211 behaves like an S pole.

### (2.1.2) First Stator

First stator 22 includes stator core 220 and winding 223 wound around stator core 220.

### (2.1.2.1) Stator Core

Stator core 220 includes yoke 221 and a plurality of teeth 222 protruding from an inner circumferential surface of yoke 221 toward the center of yoke 221.

Yoke 221 has an annular shape when viewed in the direction in which axis 100 extends (that is, the Z direction). Yoke 221 includes a plurality of steel plates stacked in the axial direction. The steel plate is formed of, for example, an electromagnetic steel plate such as a silicon steel plate.

A plurality of teeth 222 are formed at equal intervals in the circumferential direction on the inner peripheral surface of yoke 221. Teeth 222 are formed integrally with yoke 221. Teeth 222 each have a retaining protrusion formed at an end portion thereof on the distal end side (axis 100 side) protruding from yoke 221. The retaining protrusions protrude on both sides in the circumferential direction around axis 100.

### (2.1.2.2) Windings

Winding 223 is wound around stator core 220. Winding 223 includes motor winding 224 and support winding 225.

Motor winding 224 is a winding for generating torque and power in first rotor 21. In the first embodiment, since bearingless motor 1 is a three-phase AC motor, U-phase, V-phase, and W-phase windings are respectively wound around teeth 222 as motor windings 224.

Support winding 225 is a winding independent of motor winding 224. Support winding 225 generates a support force in the radial direction (direction orthogonal to the Z-axis direction) for supporting first rotor 21. In other words, support winding 225 adjusts the radial position of first rotor 21 with respect to first stator 22. In the first embodiment, U-phase, V-phase, and W-phase windings are wound around teeth 222 as support windings 225.

### (2.2) Magnetic Bearing

As shown in FIGS. 1A to 1C, magnetic bearing 3 includes second rotor 31 and second stator 32. Magnetic bearing 3 is a so-called axial gap magnetic bearing. The main role of magnetic bearing 3 is to control the position of rotor unit 10 (second rotor 31) in the Z-axis direction. Magnetic bearing 3 constitutes a sub-motor (auxiliary motor) in bearingless motor 1. Magnetic bearing 3 is controlled by the second controller. Magnetic bearing 3 is arranged below motor 2.

### (2.2.1) Second Rotor

Second rotor 31 rotates about axis 100 that is an axis of a rotation center. Second rotor 31 is formed in a circular shape when viewed in the Z-axis direction. Second rotor 31 is integrally connected to first rotor 21 to constitute rotor unit 10. In the first embodiment, second rotor 31 is integrally attached to the first rotor 21 via connecting member 11. Connecting member 11 is configured by a solid columnar member having a circular shape when viewed in the Z-axis direction. Rotor unit 10 includes first rotor 21, connecting member 11, and second rotor 31, all of which rotate integrally about axis 100.

In rotor unit 10, first rotor 21, connecting member 11, and second rotor 31 are disposed in this order in the Z-axis direction, and first rotor 21 and second rotor 31 are disposed at different positions in the Z-axis direction.

Second rotor 31 has rotor core 310. Rotor core 310 is constituted by a solid plate-shaped member having a circular shape when viewed in the Z-axis direction. Second rotor 31 may further include a magnet.

### (2.2.2) Second Stator

Second stator 32 includes stator body 320 and winding 321 disposed on stator body 320. The current supplied to winding 321 is controlled by the second controller. Stator body 320 has an annular shape when viewed in the Z-axis direction. Stator body 320 can house winding 321. Winding 321 is wound around the core.

Second stator 32 are located on both sides of second rotor 31 in the Z-axis direction. That is, two sets of stator body 320 and winding 321 are provided.

When viewed in the Z-axis direction, winding 321 is located at the same position as winding 223 of motor 2. More specifically, the distance from axis 100 to (at least a part of) winding 223 is equal to the distance from axis 100 to (at least a part of) winding 321.

### (2.3) Position Detector

Position detector 4 detects position of rotor unit 10. In the first embodiment, position detector 4 includes a distance measuring sensor and detects the distance from the distance measuring sensor to the surface of rotor unit 10. In the first embodiment, position detector 4 includes an eddy current distance measuring sensor as the distance measuring sensor. Rotor unit 10 is formed of a metal that can be detected by an eddy current distance measuring sensor. Bearingless motor 1 includes first position detector 41 and second position detector 42 as position detector 4.

### (2.3.1) First Position Detector

First position detector 41 detects the position of rotor unit 10 in the X-axis direction and the position of rotor unit 10 in the Y-axis direction. First position detector 41 detects the position of rotor unit 10 in the direction orthogonal to the Z-axis direction at each of at least two points that are not diagonal to each other around the Z-axis when viewed in the Z-axis direction.

In the first embodiment, the plurality of first position detectors 41 are disposed on a plane (referred to as an XY plane) that passes through a central portion of stator core 220 in the Z-axis direction and is orthogonal to the Z-axis direction. In the XY plane, two first position detectors 41 are disposed along a straight line extending from axis 100 in the X-axis direction, two first position detectors 41 are disposed along a straight line extending from axis 100 in the Y-axis direction, and a total of four first position detectors 41 are disposed. Four first position detectors 41 are arranged at equal intervals (at a pitch of 90 degrees) around axis 100. Four first position detectors 41 are disposed at the same position in the Z-axis direction.

First position detector 41 detects a distance to first rotor 21 of rotor unit 10, that is, a distance from the probe of first position detector 41 to the outer peripheral surface of first rotor 21.

The position of first rotor 21 on the XY coordinates with respect to first stator 22 is geometrically obtained by first position detector 41. The coordinates are fixed with respect to first stator 22 and second stator 32.

Specifically, the position of first rotor 21 in the X-axis direction is detected based on the distance to first rotor 21 detected by first position detector 41 disposed along the X-axis direction. The position of second rotor 31 in the Y-axis direction is detected based on the distance to first rotor 21 detected by first position detector 41 disposed along the Y-axis direction.

### (2.3.2) Second Position Detector

Second position detector 42 detects the position of rotor unit 10 in the Z-axis direction. Position detector 4 (second position detector 42) detects the position of rotor unit 10 in the Z-axis direction at each of at least three points that are not aligned on a straight line when viewed in the Z-axis direction.

In the first embodiment, three second position detectors 42 are disposed to face second rotor 31 on the side opposite to motor 2 with respect to second rotor 31 in the Z-axis direction. Three second position detectors 42 are arranged at equal intervals (at a pitch of 120 degrees) around axis 100. Three second position detectors 42 detect a distance to a surface (lower surface) of second rotor 31 facing the Z-axis direction. Three second position detectors 42 are disposed inside winding 321 when viewed in the Z-axis direction. That is, the distance from axis 100 to second position detector 42 is shorter than the distance from axis 100 to the winding 321.

The position of second rotor 31 on the Z coordinate, the inclination around the X axis, and the inclination around the Y axis are geometrically obtained by second position detector 42.

Specifically, the Z-coordinate position of second rotor 31 is obtained by averaging the distances to second rotor 31 detected by three second position detectors 42.

In addition, the surface of the detection target of second rotor 31 is specified from the distances to respective second rotors 31 detected by three second position detector 42, the inclination of the direction of the normal line of the surface with respect to the Y axis is the inclination around the X axis, and the inclination of the direction of the normal line with respect to the X axis is the inclination around the Y axis.

### (2.3.3) Position and Inclination of Rotor Unit

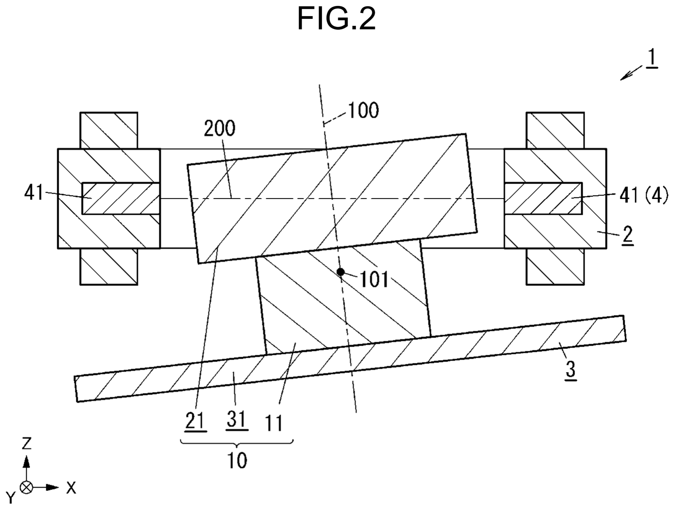

The position (X, Y, Z) of the center of gravity 101 (see FIG. 2) of rotor unit 10 on the XYZ coordinates and the inclination θx around the X axis and the inclination θy around the Y axis of rotor unit 10 are geometrically obtained from the position of first rotor 21 on the XY coordinates obtained by first position detector 41 and the position of second rotor 31 on the Z coordinates, the inclination around the X axis, and the inclination around the Y axis obtained by second position detector 42.

### (2.4) First Support Device

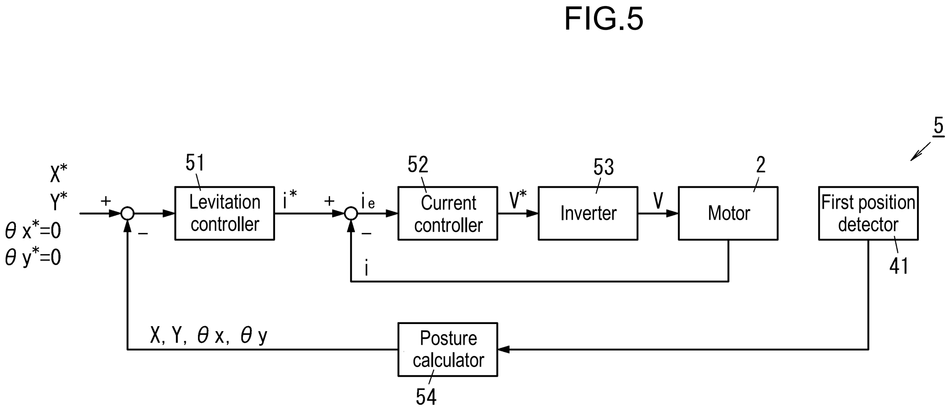

FIG. 5 is a block diagram of first support device 6 in the bearingless motor of the first embodiment. As illustrated in FIG. 5, bearingless motor 1 includes first support device 5. First support device 5 includes first stator 22 (in particular, winding 223, see FIG. 1B and the like), and generates a support force in motor 2. First support device 5 includes levitation controller 51, current controller 52, inverter 53, posture calculator 54, first stator 22, and position detector 4 (see FIG. 1B and the like).

When causing motor 2 to generate the supporting force, X*, Y*, Z*, θx* (=0), and θy* (=0) are determined as target values (= command values) of the position (X, Y, Z) on the XYZ coordinates and the inclination θx about the X-axis and the inclination θy about the Y-axis of rotor unit 10. X*, Y*, Z*, θx*, and θy* are mainly determined in the process of designing bearingless motor 1.

The above-described target values X*, Y*, θx*, and θy* are input to levitation controller 51. Measurement values X, Y, θx, and θy are input to levitation controller 51.

X, Y, θx, and θy are obtained by position detector 4 and posture calculator 54. Detection information (information such as voltage) detected by position detector 4 (first position detector 41 and second position detector 42) is input to posture calculator 54. From the detection information, posture calculator 54 obtains and outputs, as measurement values, the position (X, Y) of the center of gravity 101 of rotor unit 10 on the XY coordinates and the values of the inclination θx around the X axis and the inclination θy around the Y axis of rotor unit 10.

Deviations between the target values X*, Y*, Z*, θx*, and θy* and the measurement values X, Y, θx, and θy are input to levitation controller 51. Levitation controller 51 obtains a command value i* of a support current for generating a support force in the radial direction (XY direction) with respect to first rotor 21 (rotor unit 10) from each deviation, and outputs the command value i* to current controller 52. The current value i of the support current supplied to winding 223 is output from motor 2.

A deviation between the command value i* of the support current and the current value i is input to current controller 52. Current controller 52 obtains a voltage command value V* from a deviation between the command value i* of the support current and the current value i, and outputs the voltage command value V* to inverter 53. Inverter 53 applies the voltage V to winding 223 of motor 2 based on the voltage command value V* input from current controller 52. In this way, first support device 5 generates a support force in motor 2 by feedback control.

The functions of levitation controller 51, current controller 52, and posture calculator 54 are realized by, for example, a computer. Bearingless motor 1 includes a processing board formed of, for example, a printed board on which an electronic circuit (electric circuit) is printed. The processing board includes a central processing unit (CPU), a memory, and the like, and constitutes a computer. The computer constitutes a controller (first controller) that controls the position in the X-axis direction, the position in the Y-axis direction, the inclination around the X-axis, and the inclination around the Y-axis of first rotor 21.

### (2.5) Second Support Device

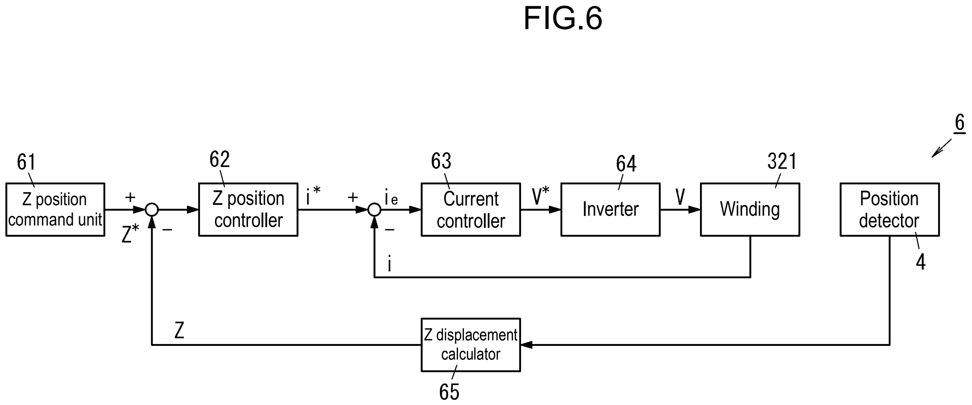

FIG. 6 is a block diagram of second support device 61 in bearingless motor 1 of the first embodiment. As illustrated in FIG. 6, bearingless motor 1 includes second support device 6. Second support device 6 includes second stator 32 (in particular, winding 321) and generates a supporting force in magnetic bearing 3. Second support device 6 includes Z position command unit 61, Z position controller 62, current controller 63, inverter 64, a Z displacement calculator 65, second stator 32, and position detector 4.

When the supporting force is generated in magnetic bearing 3, Z* is determined as a target value (= command value) of the position of the Z coordinate. When the weight changes and the position of the center of gravity 101 changes due to addition of a member to rotor unit 10, a new position of the center of gravity 101 in the Z-axis direction is obtained by Z position command unit 61. Z position command unit 61 obtains a new condition of rotor unit 10 and obtains displacement of center of gravity 101 in the Z-axis direction. Z* is calculated from a constant determined mainly in the process of designing the bearingless motor 1 and the displacement of the center of gravity 101.

The above-described target value Z* and the displacement (Z) of the center of gravity 101 are added and input to Z position controller 62. That is, each deviation between the target value Z* and the measurement value Z is input to Z position controller 62. Z position controller 62 obtains, from each deviation, a command value i* of a support current for generating a support force in the Z-axis direction for second rotor 31 (rotor unit 10), and outputs the command value i* to current controller 63. The current value i of the support current supplied to winding 321 is output from magnetic bearing 3. Z is obtained by the position detector 4 (second position detector 42) and Z displacement calculator 65. Detection information (information such as voltage) detected by second position detector 42 is input to Z displacement calculator 65. Z displacement calculator 65 calculates and outputs the position of rotor unit 10 in the Z-axis direction as a measurement value from the detection information.

A deviation between the command value i* of the support current and the current value i is input to current controller 63. Current controller 63 obtains a voltage command value V* from a deviation between the command value i* of the support current and the current value i, and outputs the voltage command value V* to inverter 64. Inverter 64 applies the voltage V to winding 321 of magnetic bearing 3 according to the voltage command value V* input from current controller 63. In this manner, second support device 6 generates a support force in magnetic bearing 3 by feedback control.

The functions of Z position command unit 61, Z position controller 62, current controller 63, and Z displacement calculator 65 are realized by, for example, a computer. The computer constitutes a controller (second controller) that controls the position of second rotor 31 (rotor unit 10) in the Z-axis direction.

### (2.6) Operation of Bearingless Motor

In bearingless motor 1, rotor unit 10 rotates to transmit torque and power to a rotating body as an output destination. The torque and power transmitted to the rotating body as an output destination are mainly generated by motor 2.

FIG. 2 is a cross-sectional view of first stator 22 and rotor unit 10 in bearingless motor 1 of the first embodiment taken along a plane including the Z axis. Rotor unit 10 (first rotor 21) receives a radial supporting force from motor 2. Further, rotor unit 10 (first rotor 21) receives a restoring torque with respect to the inclination from motor 2. As shown in FIG. 2, the supporting force in the radial direction (the X-axis direction and the Y-axis direction) received by first rotor 21 from first stator 22 is received in the direction of a line of action 200 connecting mutually opposing portions of first stator 22. When the center of gravity 101 of rotor unit 10 is not located on the line of action 200, rotor unit 10 receives a torque around the center of gravity 101 by receiving a supporting force in the direction of the line of action 200, and this torque becomes a restoring torque. However, when the center of gravity 101 is located on the line of action 200, even if rotor unit 10 receives a supporting force in the direction of the line of action 200, a torque around the center of gravity 101 is not generated, and thus a restoring torque is not generated. In this case, a torque (restoring torque) around the center of gravity 101 can be generated by moving rotor unit 10 in the Z-axis direction by magnetic bearing 3.

### (2.7) Action and Effect

Even when the center of gravity 101 of rotor unit 10 is not located on the line of action 200, the restoring torque can be generated in rotor unit 10 by moving rotor unit 10 in the Z-axis direction by magnetic bearing 3. That is, in bearingless motor 1, it is possible to actively generate the restoring torque with respect to the inclination of axis 100 of rotor unit 10 from the Z-axis direction.

Further, since magnetic bearing 3 is an axial gap magnetic bearing, a force along the Z-axis direction is easily applied to rotor unit 10 by magnetic bearing 3, and rotor unit 10 is easily moved along the Z-axis direction.

### (3) Other Embodiments

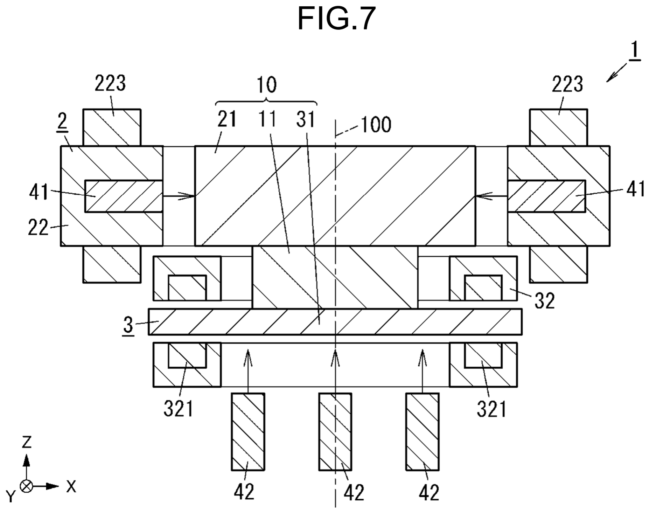

Next, bearingless motors 1 according to second to twenty-eighth embodiments will be described with reference to FIGS. 7 to 33B. Since most of bearingless motors 1 according to the second to twenty-eighth embodiments are the same as bearingless motor 1 according to the first embodiment (or any other embodiment), description of the common portions will be omitted, and different portions will be mainly described.

### (3.1) Second Embodiment

Next, bearingless motor 1 according to a second embodiment will be described with reference to FIG. 7. FIG. 7 is a cross-sectional view taken along a plane including the Z-axis of bearingless motor 1 according to the second embodiment of the present disclosure. In the first embodiment, winding 321 is located at the same position as winding 223 of motor 2 when viewed in the Z-axis direction. In contrast, in the second embodiment, winding 321 is located inside winding 223 of motor 2 when viewed in the Z-axis direction. More specifically, the distance of (at least a part of) winding 321 from axis 100 is shorter than the distance of (at least a part of) winding 223 from axis 100.

Accordingly, the size of magnetic bearing 3 in the radial direction can be reduced, and the size of bearingless motor 1 can be reduced.

### (3.2) Third Embodiment

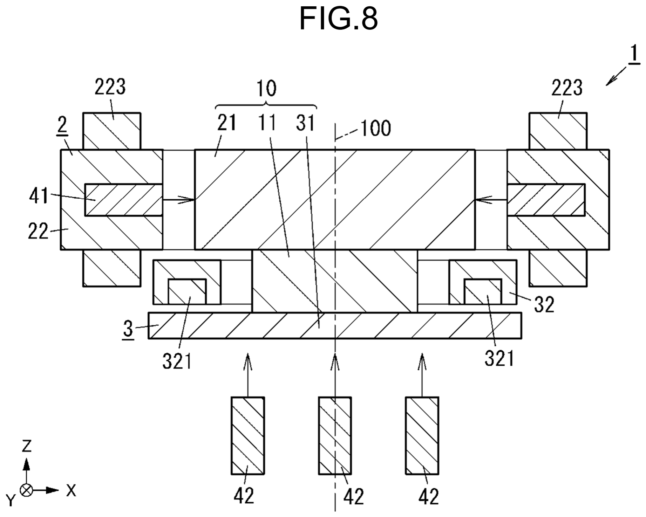

Next, bearingless motor 1 according to a third embodiment will be described with reference to FIG. 8. FIG. 8 is a cross-sectional view taken along a plane including the Z axis of bearingless motor 1 according to the third embodiment of the present disclosure. In the second embodiment, second stator 32 are located on both sides of second rotor 31 in the Z-axis direction. In contrast, in the third embodiment, second stator 32 is located only on one side of second rotor 31 in the Z-axis direction. That is, only one set of stator body 320 and winding 321 is provided.

More specifically, when axis 100 (Z-axis direction) is along the vertical direction, the set of stator body 320 and winding 321 in the second embodiment is located on both the upper side and the lower side of second rotor 31. In contrast, the set of stator body 320 and winding 321 in the third embodiment is located only above second rotor 31 in the Z-axis direction.

In the second embodiment, the set of stator body 320 and winding 321 on the lower side of second rotor 31 applies a downward force to second rotor 31. However, since the weight of second rotor 31 is applied downward, in the third embodiment, the weight of second rotor 31 is used instead of the downward force received from the set of stator body 320 and winding 321 on the lower side, and stator body 320 and winding 321 on the lower side of second rotor 31 are omitted.

This reduces the size and cost of bearingless motor 1.

### (3.3) Fourth Embodiment

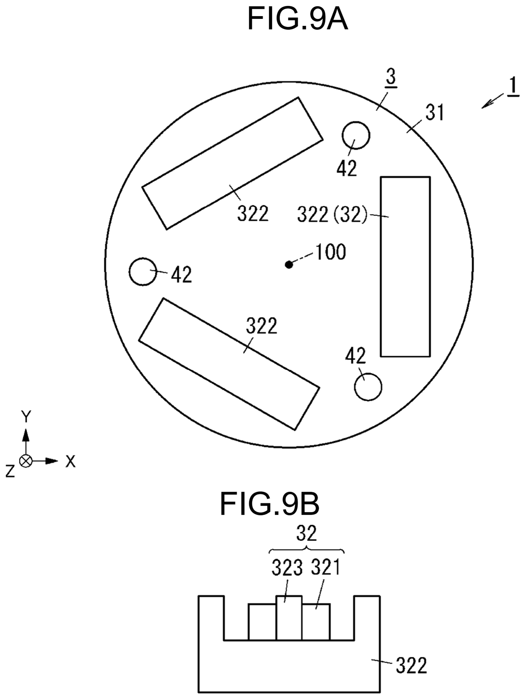

Next, bearingless motor 1 according to a fourth embodiment will be described with reference to FIGS. 9A and 9B. FIG. 9A is a cross-sectional view of bearingless motor 1 according to the fourth embodiment of the present disclosure taken along a plane including the Z axis. FIG. 9B is a cross-sectional view of second stator 32 of magnetic bearing 3 in bearingless motor 1 of the fourth example embodiment. In the first embodiment, stator body 320 has an annular shape when viewed in the Z-axis direction. On the other hand, in the fourth embodiment, when viewed in the Z-axis direction, a plurality of cases 322 housing winding 321 and core 323 are arranged at intervals in the circumferential direction around axis 100.

Accordingly, stator body 320 (case 322, winding 321, and core 323) and second position detector 42 can be disposed at the same position in the Z-axis direction and on a concentric circle centered on axis 100, and the degree of freedom in disposing second position detector 42 is improved.

### (3.4) Fifth Embodiment

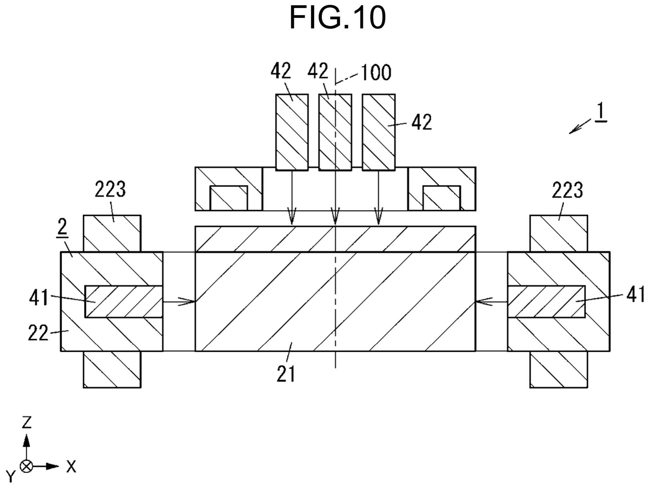

Next, bearingless motor 1 according to a fifth embodiment will be described with reference to FIG. 10. FIG. 10 is a cross-sectional view taken along a plane including the Z axis of bearingless motor 1 according to the fifth embodiment of the present disclosure. In the first embodiment, magnetic bearing 3 is arranged below motor 2. In contrast, in the fifth embodiment, magnetic bearing 3 is located above motor 2. Further, the set of stator body 320 and winding 321 of magnetic bearing 3 is located only on the upper side of second rotor 31.

In the fifth embodiment, the set of stator body 320 and winding 321 may be located on both the upper side and the lower side of second rotor 31.

### (3.5) Sixth Embodiment

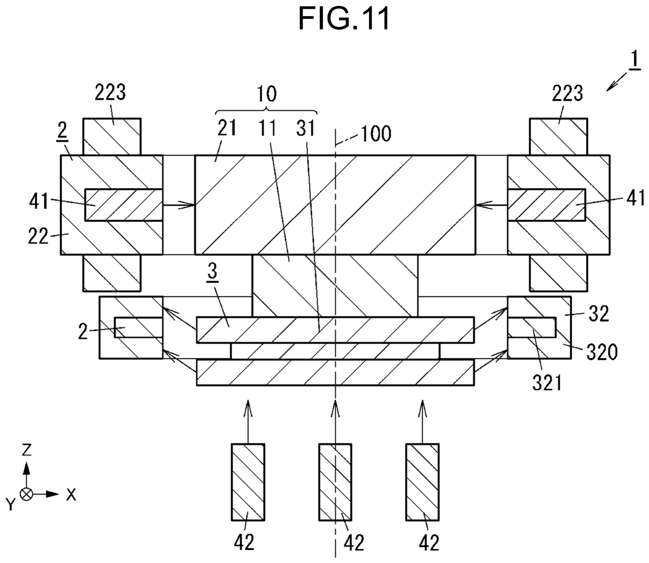

Next, a bearingless motor 1 according to a sixth embodiment will be described with reference to FIG. 11. FIG. 11 is a cross-sectional view of bearingless motor 1 according to the sixth embodiment of the present disclosure taken along a plane including the Z axis. In the first to fifth embodiments, magnetic bearing 3 is of an axial gap magnetic bearing. In contrast, in the sixth embodiment, magnetic bearing 3 is of a radial gap magnetic bearing.

As a result, the gap between first rotor 21 and first stator 22 in motor 2 and the gap between second rotor 31 and second stator 32 in magnetic bearing 3 can be positioned on the same cylinder extending in the Z-axis direction, and the assemblability is improved.

In addition, for example, in a case where a flow path through which gas or liquid for cooling first stator 22 or second stator 32 passes is disposed, it is easy to dispose the flow path so as to extend in the Z-axis direction through the gap in motor 2 and the gap in magnetic bearing 3.

### (3.6) Seventh Embodiment

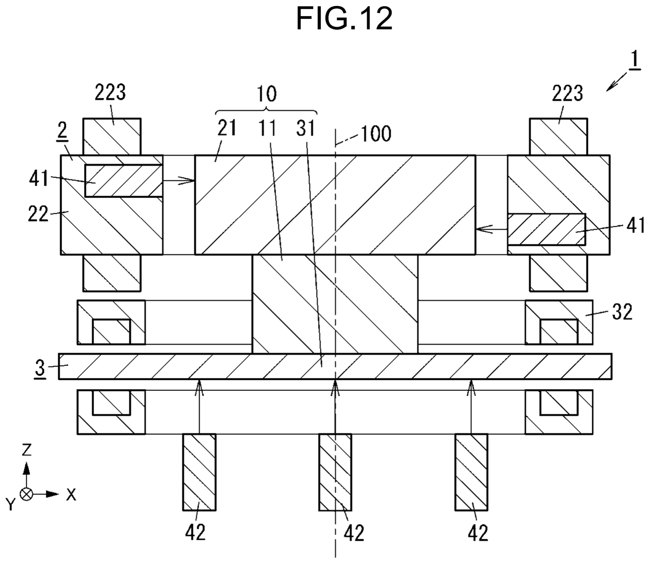

Next, bearingless motor 1 according to a seventh embodiment will be described with reference to FIG. 12. FIG. 12 is a cross-sectional view taken along a plane including the Z axis of bearingless motor 1 according to the seventh embodiment of the present disclosure. In the first embodiment, four first position detectors 41 are disposed at the same position in the Z-axis direction. In contrast, in the seventh embodiment, the plurality of first position detectors 41 are disposed at positions different from each other in the Z-axis direction.

Accordingly, the degree of freedom of arrangement of first position detector 41 is improved.

### (3.7) Eighth Embodiment

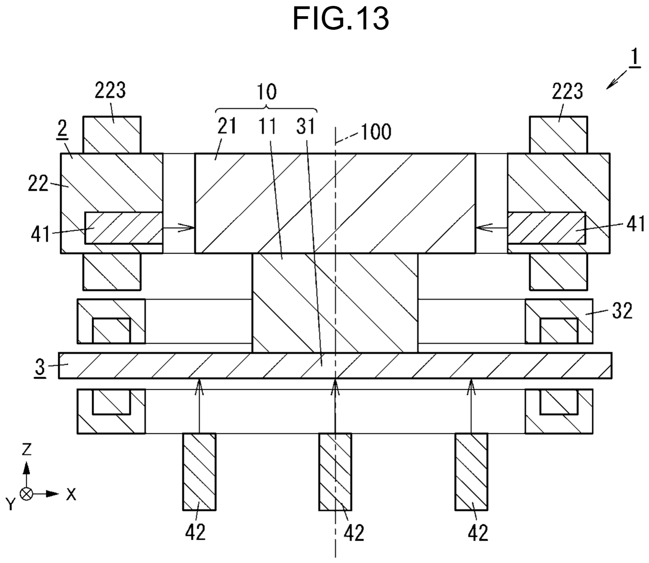

Next, bearingless motor 1 according to an eighth embodiment will be described with reference to FIG. 13. FIG. 13 is a cross-sectional view taken along a plane including the Z axis of bearingless motor 1 according to the eighth embodiment of the present disclosure. In the first embodiment, the plurality of first position detectors 41 are disposed on the XY plane passing through the central portion of stator core 220 in the Z-axis direction. On the other hand, in the eighth embodiment, the plurality of first position detectors 41 are disposed on the XY plane orthogonal to the Z-axis direction and passing through a portion below the central portion of stator core 220 in the Z-axis direction.

Since the plurality of first position detectors 41 do not need to be disposed on the XY plane passing through the central portion of stator core 220 in the Z-axis direction, the degree of freedom in the arrangement of first position detectors 41 is improved.

### (3.8) Ninth Embodiment

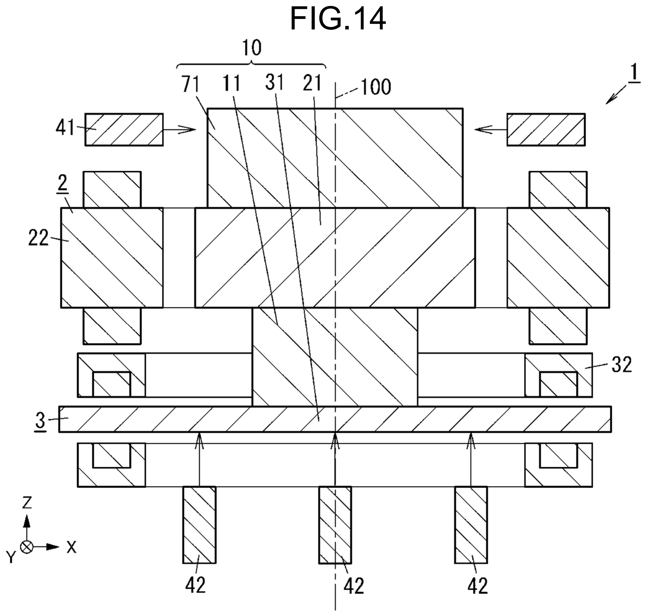

Next, bearingless motor 1 according to a ninth embodiment will be described with reference to FIG. 14. FIG. 14 is a cross-sectional view taken along a plane including the Z axis of bearingless motor 1 according to the ninth embodiment of the present disclosure. In the ninth embodiment, member 71 to be directly detected by position detector 4 is provided above first rotor 21. Member 71, first rotor 21, coupling member 11, and second rotor 31 are integrated to form rotor unit 10.

First position detector 41 is disposed at the same position as member 71 in the Z-axis direction. In this way, by providing member 71, the degree of freedom of arrangement of first position detector 41 is improved.

### (3.9) Tenth Embodiment

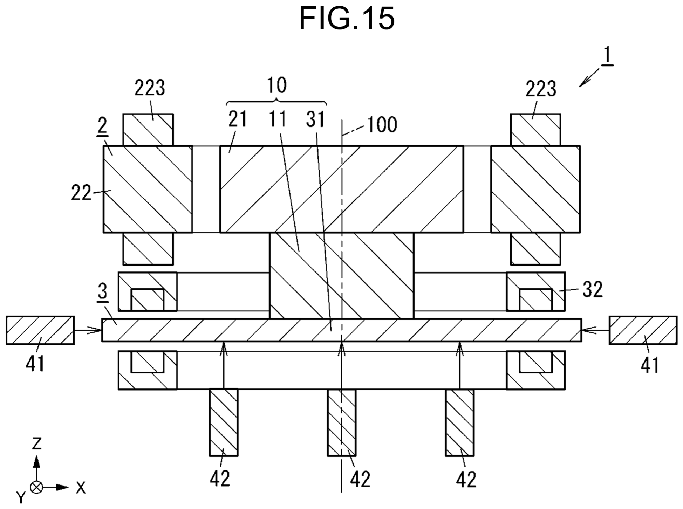

Next, bearingless motor 1 according to a tenth embodiment will be described with reference to FIG. 15. FIG. 15 is a cross-sectional view taken along a plane including the Z axis of bearingless motor 1 according to the tenth embodiment of the present disclosure. In the first to ninth embodiments, first position detector 41 detects distance to first rotor 21 of rotor unit 10 (that is, the distance from the probe of first position detector 41 to the outer peripheral surface of first rotor 21). In contrast, in the tenth embodiment, first position detector 41 detects the distance to second rotor 31 of rotor unit 10 (that is, the distance from the probe of first position detector 41 to the outer peripheral surface of second rotor 31). Accordingly, the degree of freedom of arrangement of first position detector 41 is improved.

### (3.10) Eleventh Embodiment

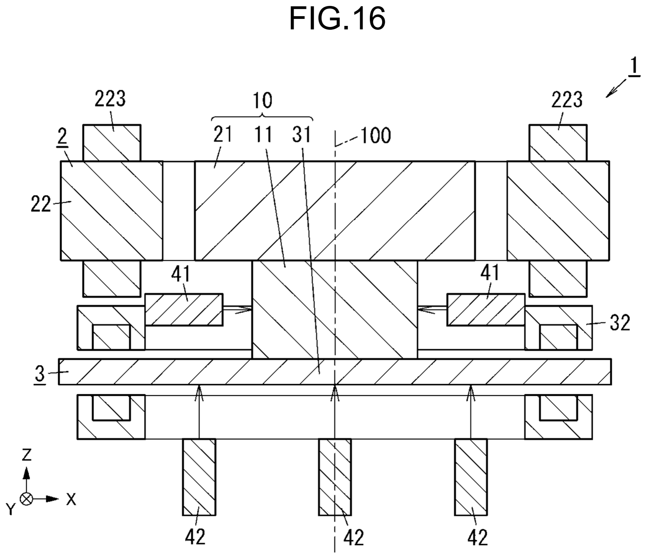

Next, bearingless motor 1 according to an eleventh embodiment will be described with reference to FIG. 16. FIG. 16 is a cross-sectional view of bearingless motor 1 according to the eleventh embodiment of the present disclosure taken along a plane including the Z axis. In the tenth embodiment, first position detector 41 detects the distance to second rotor 31 of rotor unit 10 (that is, the distance from the probe of first position detector 41 to the outer peripheral surface of second rotor 31). In contrast, in the eleventh embodiment, first position detector 41 detects the distance to coupling member 11 of rotor unit 10 (that is, the distance from the probe of first position detector 41 to the outer peripheral surface of coupling member 11). Accordingly, the degree of freedom of arrangement of first position detector 41 is improved.

### (3.11) Twelfth Embodiment

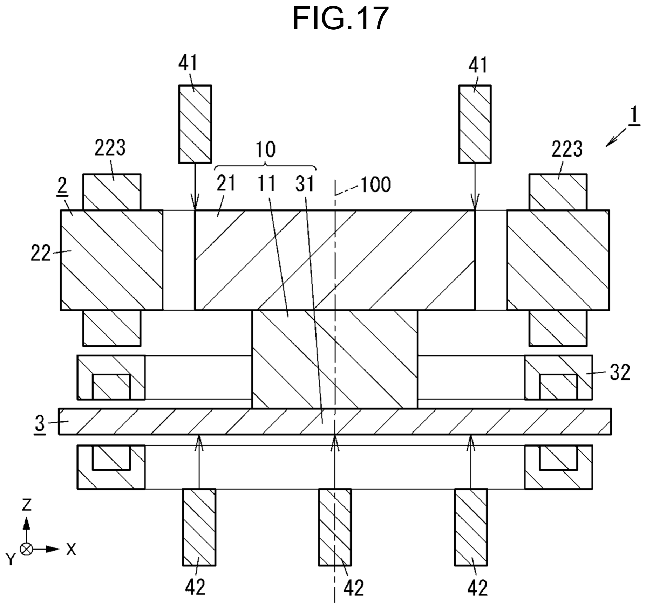

Next, bearingless motor 1 according to a twelfth embodiment will be described with reference to FIG. 17. FIG. 17 is a cross-sectional view of bearingless motor 1 according to the twelfth embodiment of the present disclosure taken along a plane including the Z axis. In the first to eleventh embodiments, first position detector 41 detects the distance from the probe of first position detector 41 to the outer peripheral surface of first rotor 21 in the direction orthogonal to the Z-axis direction.

In contrast, in the twelfth embodiment, first position detector 41 includes a so-called eddy current distance measuring sensor. First position detector 41 detects a distance in the Z-axis direction from the probe of first position detector 41 to a surface (upper surface) of first rotor 21 facing the Z-axis direction. At this time, first position detector 41 detects an edge of rotor unit 10 when viewed in the Z-axis direction.

When detecting a surface to be detected (a surface having no edge), first position detector 41 including the eddy current distance measuring sensor outputs a physical quantity (voltage) depending on a distance (distance in the Z-axis direction) from the probe to a plane of a portion to be detected. However, when first position detector 41 including the eddy current distance measuring sensor detects the edge of rotor unit 10 as viewed in the Z-axis direction, first position detector 41 outputs a physical quantity that depends not only on the distance from the probe to the plane of the portion to be detected (distance in the Z-axis direction) but also on the position of the edge in a direction orthogonal to the Z-axis direction. That is, one first position detector 41 outputs one physical quantity including two pieces of information of the distance to the Z-axis direction and the position of the edge in the direction orthogonal to the Z-axis direction. Accordingly, first position detector 41 including the plurality of eddy current distance measuring sensors detects the edge of rotor unit 10 when viewed in the Z-axis direction at different positions, and thus it is possible to geometrically obtain the distance to the detection target (the surface of first rotor 21 facing the Z-axis direction) in the Z-axis direction at each position. Accordingly, the degree of freedom of arrangement of first position detector 41 is improved.

### (3.12) Thirteenth Embodiment

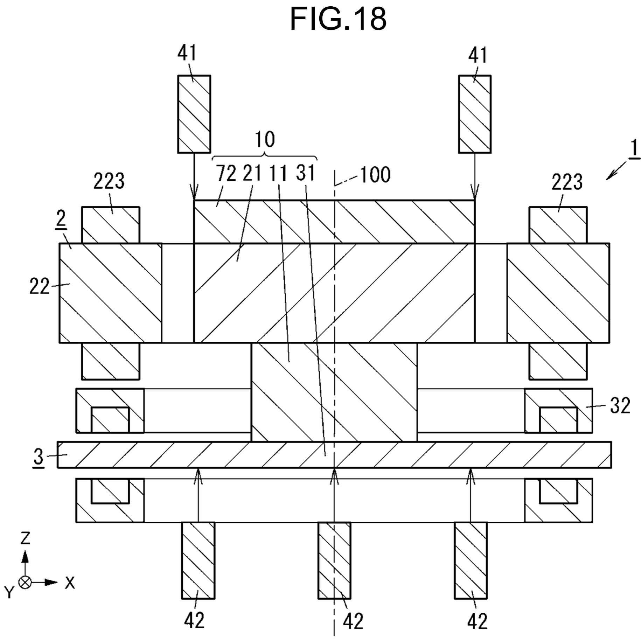

Next, bearingless motor 1 according to a thirteenth embodiment will be described with reference to FIG. 18. FIG. 18 is a cross-sectional view taken along a plane including the Z axis of bearingless motor 1 according to the thirteenth embodiment of the present disclosure. In the twelfth embodiment, first position detector 41 detects the distance in the Z-axis direction from the probe of first position detector 41 to the surface (upper surface) of first rotor 21 facing the Z-axis direction. On the other hand, in the thirteenth embodiment, first position detector 41 detects the distance in the Z-axis direction from the probe of first position detector 41 to the surface (upper surface) facing the Z-axis direction of member 72 to be directly detected by position detector 4. Member 72, first rotor 21, coupling member 11, and second rotor 31 are integrated to form rotor unit 10. Accordingly, the degree of freedom of arrangement of first position detector 41 is improved compared to the twelfth embodiment.

### (3.13) Fourteenth Embodiment

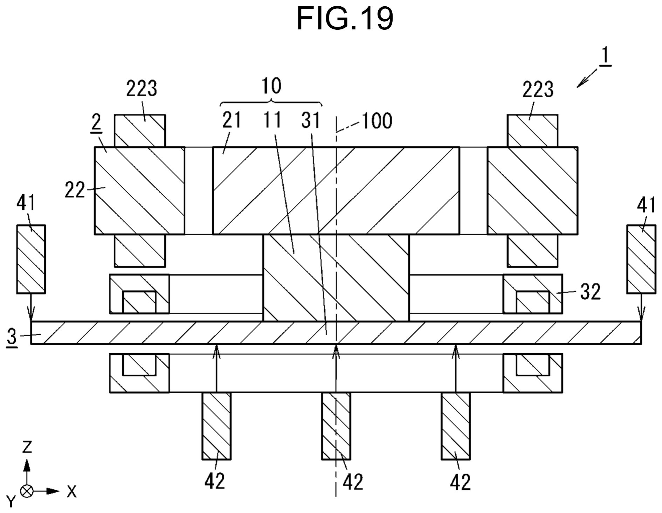

Next, bearingless motor 1 according to a fourteenth embodiment will be described with reference to FIG. 19. FIG. 19 is a cross-sectional view taken along a plane including the Z axis of bearingless motor 1 according to the fourteenth embodiment of the present disclosure. In the tenth embodiment, first position detector 41 detects the distance to second rotor 31 of rotor unit 10 (that is, the distance from the probe of first position detector 41 to the outer peripheral surface of second rotor 31). In contrast, in the fourteenth embodiment, first position detector 41 detects the distance from the probe to the surface (upper surface) of second rotor 31 facing the Z-axis direction in the Z-axis direction. Accordingly, the degree of freedom of arrangement of first position detector 41 is improved.

### (3.14) Fifteenth Embodiment

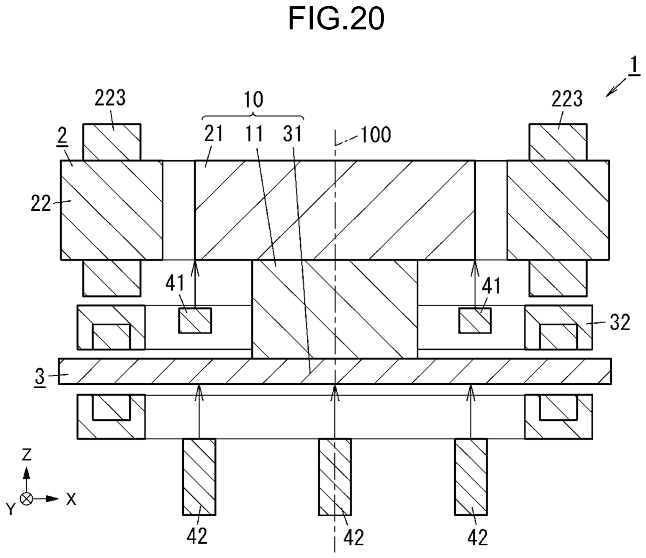

Next, bearingless motor 1 according to a fifteenth embodiment will be described with reference to FIG. 20. FIG. 20 is a cross-sectional view of bearingless motor 1 according to the fifteenth embodiment of the present disclosure taken along a plane including the Z axis. In the fourteenth embodiment, first position detector 41 detects the distance from the probe to the surface (lower surface) of second rotor 31 facing the Z-axis direction in the Z-axis direction. In contrast, in the fifteenth embodiment, first position detector 41 detects the distance from the probe to the surface (lower surface) of first rotor 21 facing the Z-axis direction in the Z-axis direction. Accordingly, the degree of freedom of arrangement of first position detector 41 is improved.

### (3.15) Sixteenth Embodiment

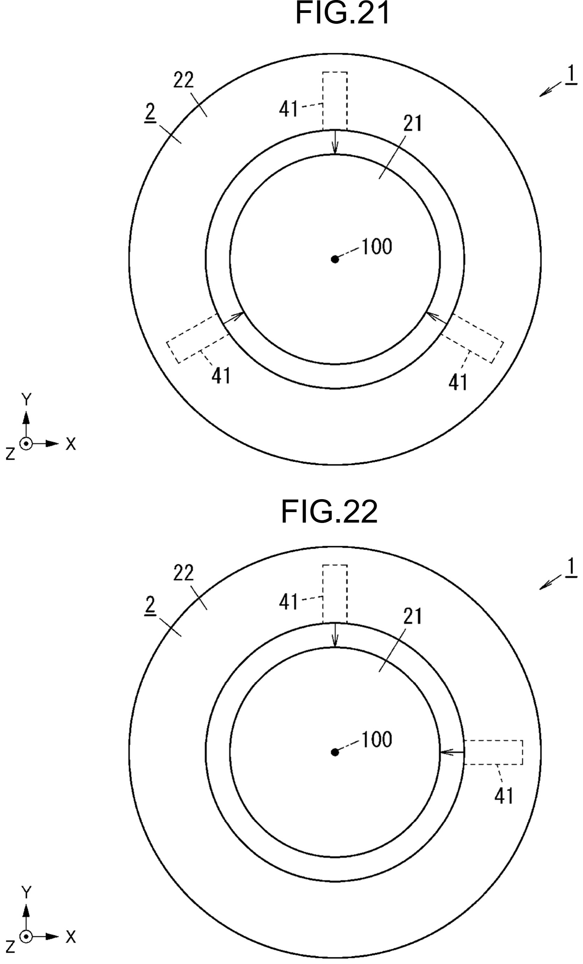

Next, bearingless motor 1 according to a sixteenth embodiment will be described with reference to FIG. 21. FIG. 21 is a plan view of bearingless motor 1 according to the sixteenth embodiment of the present disclosure. In the first embodiment, four first position detectors 41 are arranged at equal intervals (at a pitch of 90 degrees) around axis 100. In contrast, in the sixteenth embodiment, three first position detectors 41 are arranged at equal intervals (at a pitch of 120 degrees) around axis 100. Thus, the number of first position detectors 41 is reduced as compared with the case where four first position detectors 41 are provided.

### (3.16) Seventeenth Embodiment

Next, bearingless motor 1 according to a seventeenth embodiment will be described with reference to FIG. 22. FIG. 22 is a plan view of bearingless motor 1 according to the seventeenth embodiment of the present disclosure. In the first embodiment, four first position detectors 41 are arranged around axis 100. In the sixteenth embodiment, three first position detectors 41 are arranged around axis 100. In contrast, in the seventeenth embodiment, two first position detectors 41 are disposed around axis 100. Accordingly, the number of first position detectors 41 is reduced as compared with a case where four first position detectors 41 are provided and a case where three first position detectors 41 are provided. Accordingly, the degree of freedom of arrangement of first position detector 41 is improved.

### (3.17) Eighteenth Embodiment

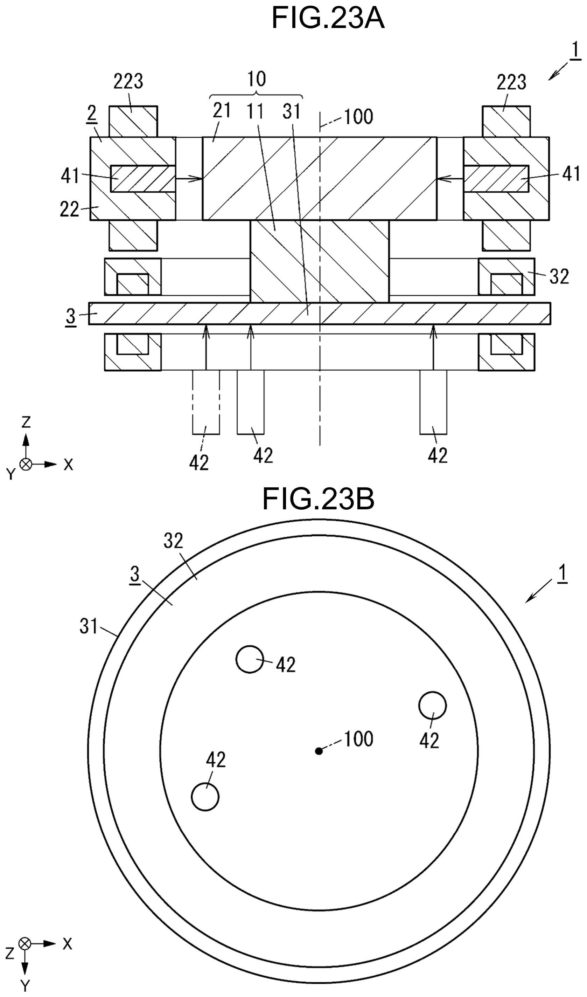

Next, bearingless motor 1 according to an eighteenth embodiment will be described with reference to FIGS. 23A and 23B. FIG. 23A is a cross-sectional view of bearingless motor 1 according to the eighteenth embodiment of the present disclosure taken along a plane including the Z axis. FIG. 23B is a bottom view of bearingless motor 1 according to the eighteenth embodiment of the present invention. In the first embodiment, three second position detectors 42 are arranged at equal intervals (at a pitch of 120 degrees) around axis 100 on the XY plane. On the other hand, in the eighteenth embodiment, three second position detectors 42 are arranged at unequal intervals around axis 100. None of three second position detectors 42 is located on axis 100. Accordingly, the degree of freedom of arrangement of the second position detector 42 is improved.

### (3.18) Nineteenth Embodiment

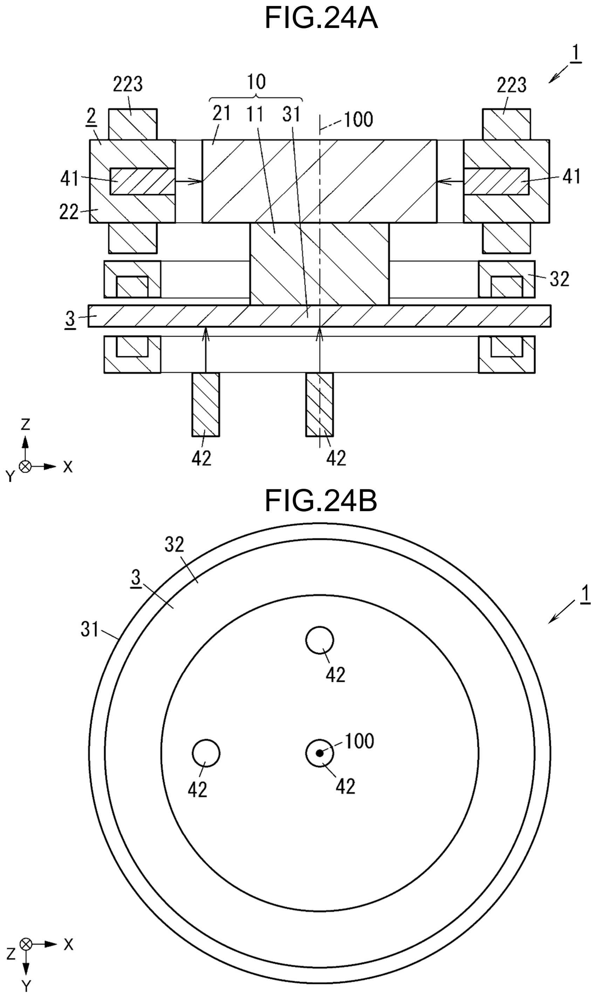

Next, bearingless motor 1 according to a nineteenth embodiment will be described with reference to FIGS. 24A and 24B. FIG. 24A is a cross-sectional view of bearingless motor 1 according to the nineteenth embodiment of the present disclosure taken along a plane including the Z axis. FIG. 24B is a bottom view of bearingless motor 1 according to the nineteenth embodiment. In the eighteenth embodiment, three second position detectors 42 are arranged around axis 100 at unequal intervals, and none of three second position detectors 42 is located on axis 100.

On the other hand, in the nineteenth embodiment, three second position detectors 42 are arranged at unequal intervals around axis 100, and one second position detector 42 is located on axis 100. Accordingly, the degree of freedom of arrangement of second position detector 42 is improved.

### (3.19) Twentieth Embodiment

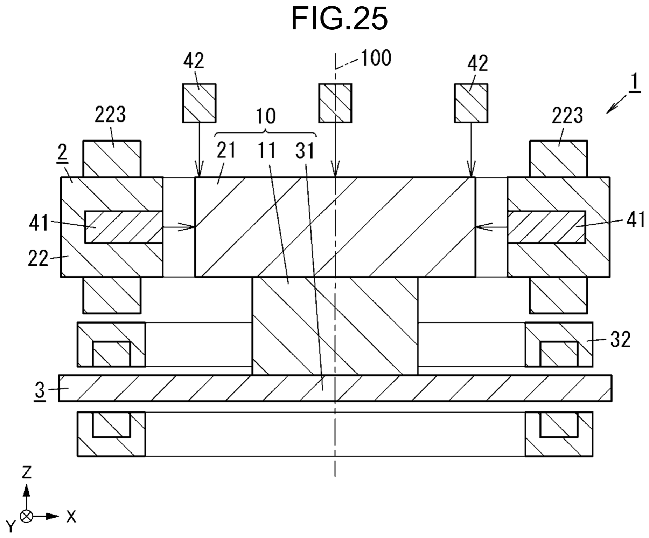

Next, bearingless motor 1 according to a twentieth embodiment will be described with reference to FIG. 25. FIG. 25 is a cross-sectional view of bearingless motor 1 according to the twentieth embodiment of the present disclosure taken along a plane including the Z axis. In the first embodiment, second position detector 42 detects a distance to a surface (lower surface) of second rotor 31 facing the Z-axis direction. In contrast, in the twentieth embodiment, second position detector 42 detects the distance to the surface (upper surface) of first rotor 21 facing the Z-axis direction. Accordingly, the degree of freedom of arrangement of second position detector 42 is improved.

### (3.20) Twenty-First Embodiment

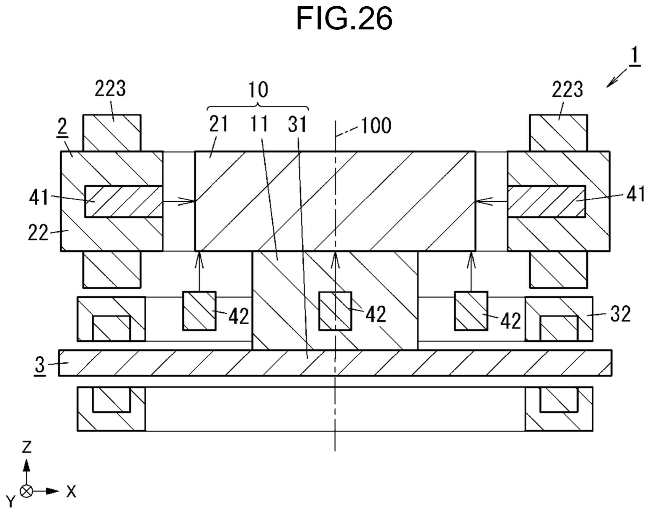

Next, bearingless motor 1 according to a twenty-first embodiment will be described with reference to FIG. 26. FIG. 26 is a cross-sectional view of bearingless motor 1 according to the twenty-first embodiment of the present disclosure taken along a plane including the Z axis. In the first embodiment, second position detector 42 detects the distance to the surface (lower surface) of second rotor 31 facing the Z-axis direction, and in the twentieth embodiment, second position detector 42 detects the distance to the surface (upper surface) of first rotor 21 facing the Z-axis direction on the side farther from magnetic bearing 3.

In contrast, in the twenty-first embodiment, second position detector 42 detects a distance to a surface (lower surface) of first rotor 21 facing the Z-axis direction, the surface being closer to magnetic bearing 3. Accordingly, the degree of freedom of arrangement of second position detector 42 is improved.

### (3.21) Twenty-Second Embodiment

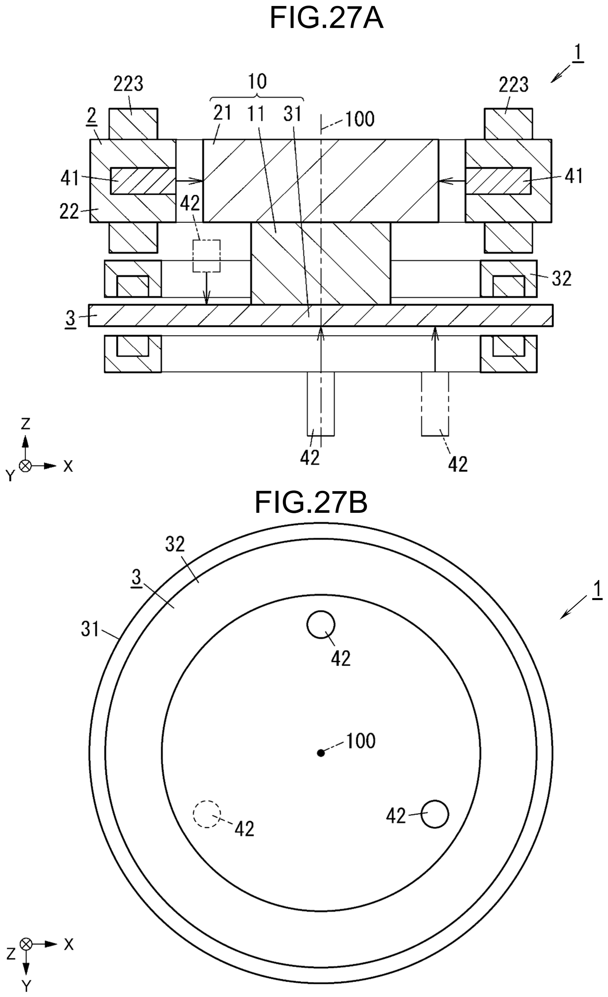

Next, bearingless motor 1 according to a twenty-second embodiment will be described with reference to FIGS. 27A and 27B. FIG. 27A is a cross-sectional view taken along a plane including the Z axis of bearingless motor 1 according to the twenty-second embodiment of the present disclosure. FIG. 27B is a bottom view of bearingless motor 1 according to the twenty-second embodiment. In the first embodiment, three second position detectors 42 detect the distance to the surface (lower surface) of second rotor 31 facing the Z-axis direction. In contrast, in the twenty-second embodiment, second position detectors 42 detect the distance to the surface (lower surface) of second rotor 31 facing the Z-axis direction, and one second position detector 42 detects the distance to the surface (upper surface) of the second rotor 31 facing the Z-axis direction. Accordingly, the degree of freedom of arrangement of the second position detector 42 is improved.

### (3.22) Twenty-Third Embodiment

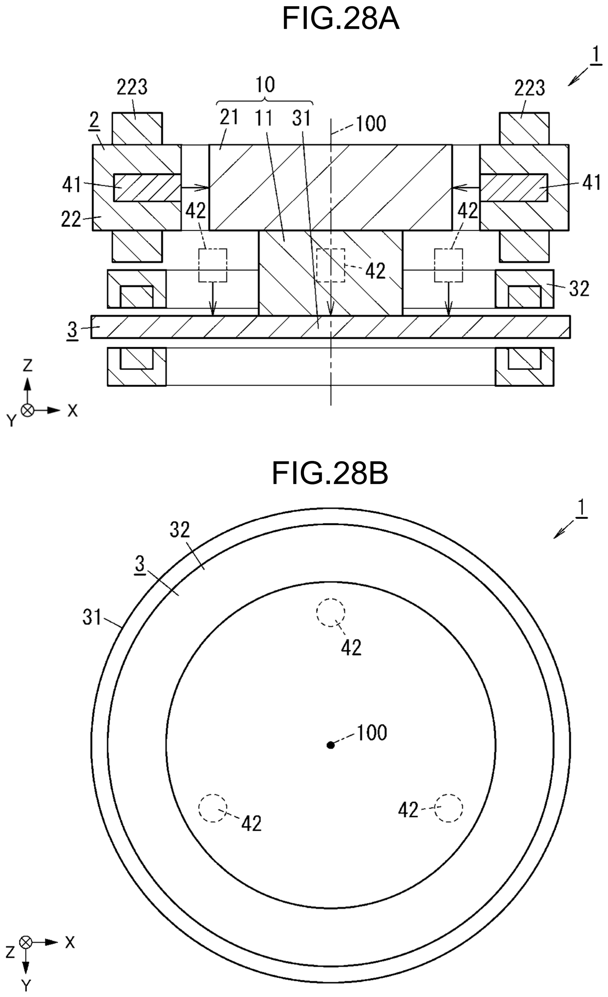

Next, bearingless motor 1 according to a twenty-third embodiment will be described with reference to FIGS. 28A and 28B. FIG. 28A is a cross-sectional view of bearingless motor 1 according to the twenty-third embodiment of the present disclosure taken along a plane including the Z axis. FIG. 28B is a bottom view of bearingless motor 1 according to the twenty-third embodiment. In the first embodiment, three second position detectors 42 detect the distance to the surface (lower surface) of second rotor 31 facing the Z-axis direction. In contrast, in the twenty-third embodiment, three second position detectors 42 detect the distance to the surface (upper surface) of second rotor 31 facing the Z-axis direction. Accordingly, the degree of freedom of arrangement of second position detector 42 is improved.

### (3.23) Twenty-Fourth Embodiment

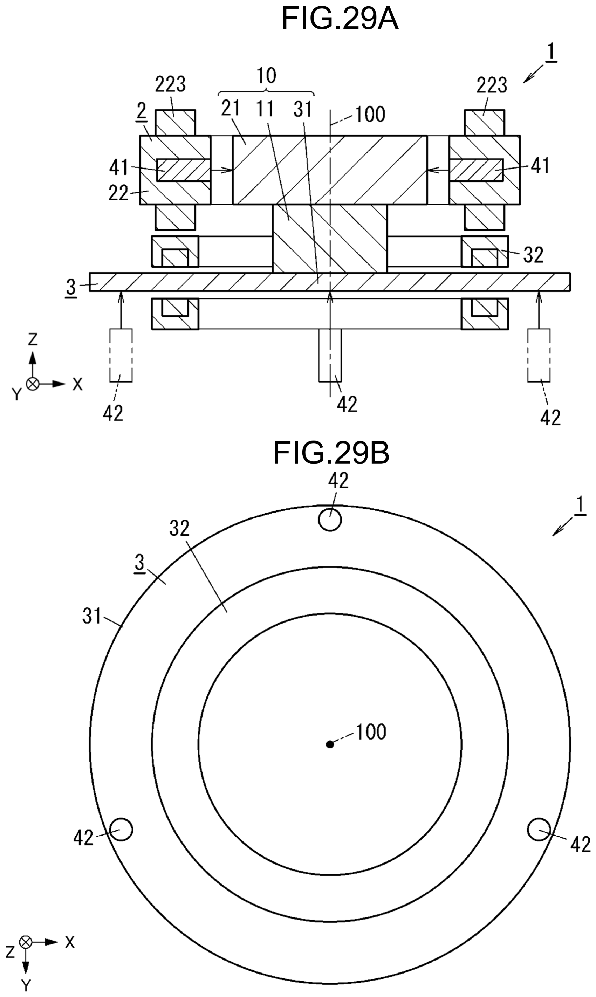

Next, bearingless motor 1 according to a twenty-fourth embodiment will be described with reference to FIGS. 29A and 29B. FIG. 29A is a cross-sectional view of bearingless motor 1 according to the twenty-fourth embodiment of the present disclosure taken along a plane including the Z axis. FIG. 29B is a bottom view of bearingless motor 1 according to the twenty-fourth embodiment. In the first embodiment, three second position detectors 42 are disposed inside winding 321 when viewed in the Z-axis direction. That is, the distance from axis 100 to second position detector 42 is shorter than the distance from axis 100 to winding 321.

In contrast, in the twenty-fourth embodiment, three second position detectors 42 are disposed outside winding 321 when viewed in the Z-axis direction. That is, the distance from axis 100 to second position detector 42 is longer than the distance from axis 100 to winding 321. Accordingly, the degree of freedom of arrangement of second position detector 42 is improved.

### (3.24) Twenty-Fifth Embodiment

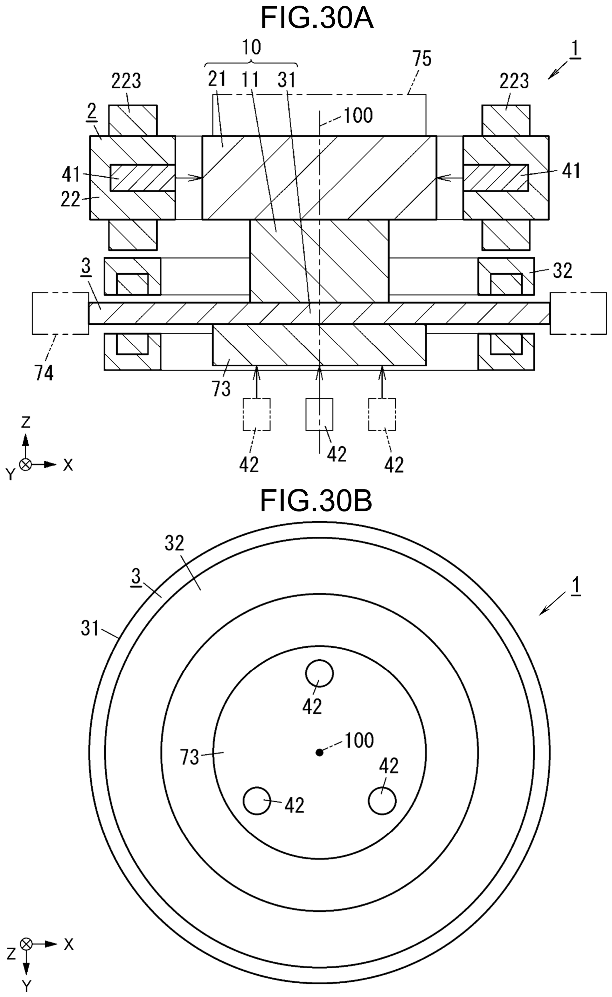

Next, bearingless motor 1 according to a twenty-fifth embodiment will be described with reference to FIGS. 30A and 30B. FIG. 30A is a cross-sectional view of bearingless motor 1 according to the twenty-fifth embodiment of the present disclosure taken along a plane including the Z axis. FIG. 30B is a bottom view of bearingless motor 1 according to the twenty-fifth embodiment. In the first embodiment, second position detector 42 directly detects the distance to the second position detector 42. In contrast, in the twenty-fifth embodiment, member 73 to be directly detected by second position detector 42 is provided on the lower side of second rotor 31, and second position detector 42 detects the distance to member 73 in the Z-axis direction. Member 73, first rotor 21, connecting member 11, and second rotor 31 are integrated to form rotor unit 10.

In this way, by providing member 73, the degree of freedom of arrangement of second position detector 42 is improved. Member 74 to be directly detected by second position detector 42 may be provided on the outer peripheral surface of second rotor 31. Member 75 to be directly detected by second position detector 42 may be provided above first rotor 21.

### (3.25) Twenty-Sixth Embodiment

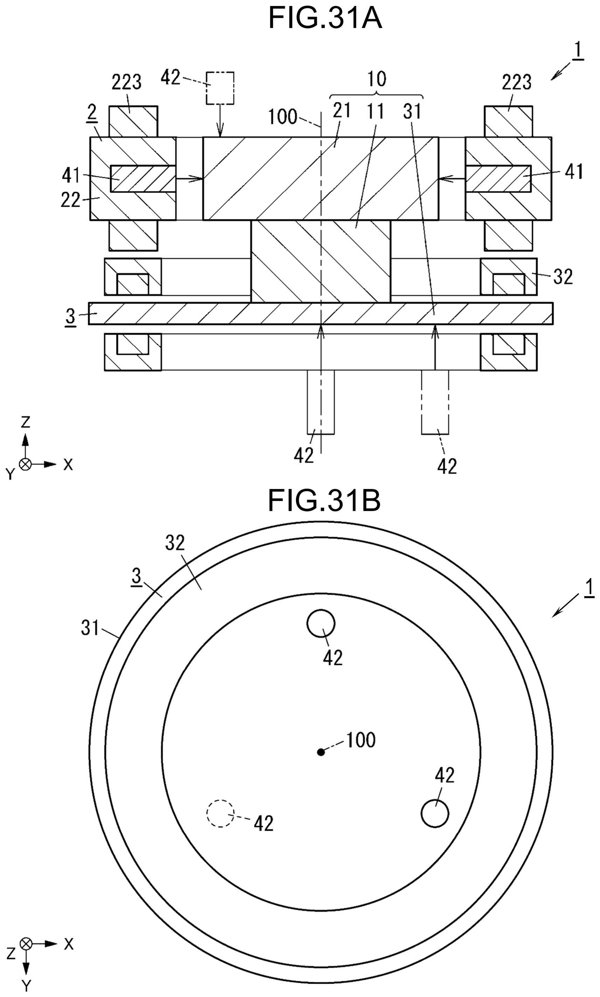

Next, bearingless motor 1 according to a twenty-sixth embodiment will be described with reference to FIGS. 31A and 31B. FIG. 31A is a cross-sectional view of bearingless motor 1 according to the twenty-sixth embodiment of the present disclosure taken along a plane including the Z axis. FIG. 31B is a bottom view of bearingless motor 1 according to the twenty-sixth embodiment. In the first embodiment, three second position detectors 42 detect the distance to the surface (lower surface) of second rotor 31 facing the Z-axis direction. In contrast, in the twenty-second embodiment, two second position detectors 42 detect the distance to the surface (lower surface) of second rotor 31 facing the Z-axis direction, and one second position detector 42 detects the distance to the surface (upper surface) of first rotor 21 facing the Z-axis direction. Accordingly, the degree of freedom of arrangement of second position detector 42 is improved.

### (3.26) Twenty-Seventh Embodiment

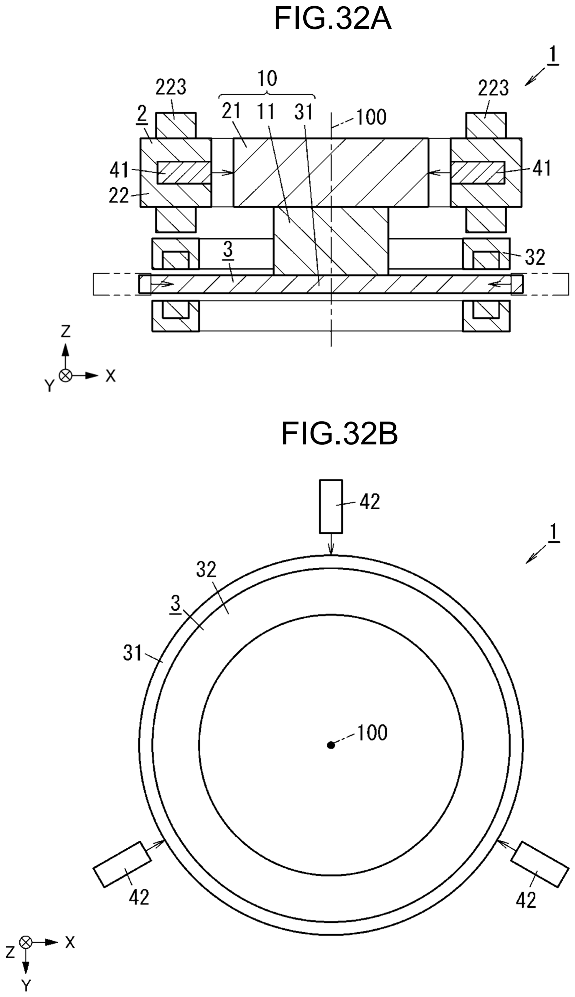

Next, bearingless motor 1 according to a twenty-seventh embodiment will be described with reference to FIGS. 32A and 32B. FIG. 32A is a cross-sectional view taken along a plane including the Z axis of bearingless motor 1 according to the twenty-seventh embodiment of the present disclosure. FIG. 32B is a bottom view of bearingless motor 1 according to the twenty-seventh embodiment. In the first embodiment, three second position detectors 42 detect the distance to the surface (lower surface) of second rotor 31 facing the Z-axis direction. In contrast, in the twenty-seventh embodiment, second position detector 42 detects the distance from the probe of second position detector 42 to the outer peripheral surface of second rotor 31 in the direction orthogonal to the Z-axis direction.

Second position detector 42 includes a so-called eddy current distance measuring sensor. At this time, second position detector 42 detects an edge of rotor unit 10 when viewed in a direction orthogonal to the Z-axis direction.

When second position detector 42 having the eddy current distance measuring sensor detects the edge of rotor unit 10 when viewed in the direction orthogonal to the Z-axis direction, second position detector 42 outputs a physical quantity depending on not only the distance from the probe to the plane of the portion to be detected (distance in the direction orthogonal to the Z-axis direction) but also the position of the edge in the Z-axis direction. That is, one second position detector 42 outputs one physical quantity including two pieces of information of the position of the edge in the Z-axis direction and the distance to the direction orthogonal to the Z-axis direction. Accordingly, second position detector 42 including the plurality of eddy current distance measuring sensors detects the edge of rotor unit 10 when viewed in the direction orthogonal to the Z-axis direction at different positions, and thus the position of the detection target in the Z-axis direction at each position can be geometrically obtained. Accordingly, the degree of freedom of arrangement of second position detector 42 is improved.

### (3.27) Twenty-Eighth Embodiment

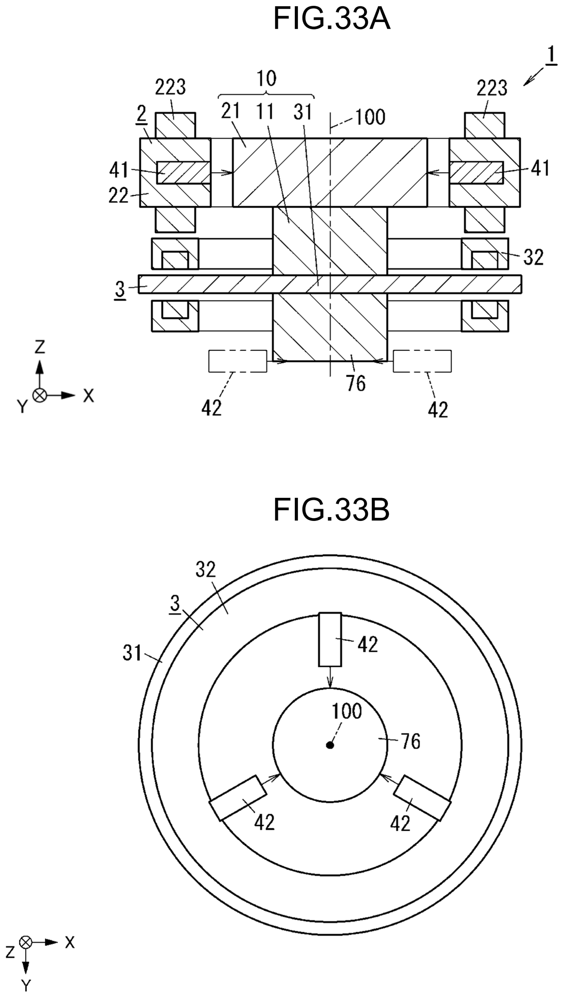

Next, bearingless motor 1 according to a twenty-eighth embodiment will be described with reference to FIGS. 33A and 33B. FIG. 33A is a cross-sectional view of bearingless motor 1 according to the twenty-eighth embodiment of the present disclosure taken along a plane including the Z axis. FIG. 33B is a bottom view of bearingless motor 1 according to the twenty-eighth embodiment. In the twenty-seventh embodiment, second position detector 42 directly detects the distance to second position detector 42. In contrast, in the twenty-eighth embodiment, member 76 to be directly detected by second position detector 42 is provided on the lower side of the second rotor 31, and second position detector 42 detects the distance to member 76 in the direction orthogonal to the Z-axis direction. Member 76, first rotor 21, connecting member 11, and second rotor 31 are integrated to form rotor unit 10. In this way, by providing member 76, the degree of freedom of arrangement of second position detector 42 is improved.

### (4) MODIFICATIONS

Bearingless motor 1 is not limited to a consequent-pole motor, and may be, for example, a homopolar motor.

The Z-axis direction may not necessarily be parallel to the vertical direction.

Bearingless motor 1 is not limited to a three-phase AC motor.

First rotor 21 may be formed of a hollow member. The shape of first rotor 21 is not particularly limited.

The rotating body of the output destination may not be attached to first rotor 21, and may be attached to any portion of rotor unit 10.

Winding 223 and motor winding 224 may not be independent. That is, the same winding may be used as winding 223 and motor winding 224, and the current to be supplied to winding 223 and the current to be supplied to motor winding 224 may be superimposed and supplied to the winding.

Second rotor 31 may be formed of a hollow member. The shape of second rotor 31 is not particularly limited.

The functions of levitation controller 51, current controller 52, posture calculator 54, Z position command unit 61, Z position controller 62, current controller 63, and Z displacement calculator 65 may be realized by separate computers. The functions of levitation controller 51, current controller 52, posture calculator 54, Z position command unit 61, Z position controller 62, current controller 63, and Z displacement calculator 65 may be realized by one computer included in bearingless motor 1. That is, as long as the functions of levitation controller 51, current controller 52, posture calculator 54, Z position command unit 61, Z position controller 62, current controller 63, and Z displacement calculator 65 are exhibited, specific forms thereof are not limited. Bearingless motor 1 does not necessarily include all of levitation controller 51, current controller 52, posture calculator 54, Z position command unit 61, Z position controller 62, current controller 63, and Z displacement calculator 65.

The distance measuring sensor included in the position detector 4 is not particularly limited and may be, for example, a laser distance measuring sensor instead of the eddy current distance measuring sensor.

The position detector 4 may be a device that mechanically detects the position of rotor unit 10, such as a potentiometer, instead of the distance measuring sensor. That is, position detector 4 is not particularly limited as long as it can directly or indirectly detect the position of rotor unit 10.

### (5) Summary

As described above, a bearingless motor (1) according to a first aspect includes a motor (2), a magnetic bearing (3), a first controller, and a second controller. The motor (2) is a radial gap motor including a first rotor (21) and a first stator (22) that rotate about an axis (100) along a Z-axis direction of an orthogonal coordinate system having an X-axis, a Y-axis, and a Z-axis. The magnetic bearing (3) includes a second rotor (31) and a second stator (32) that rotate about an axis (100). The first rotor (21) and the second rotor (31) are disposed at different positions in the Z-axis direction and are integrally coupled to each other to constitute a rotor unit (10). The first controller controls a position of the first rotor (21) in an X-axis direction, a position of the first rotor (21) in a Y-axis direction, an inclination of the first rotor (21) about the X-axis, and an inclination of the first rotor (21) about the Y-axis. The second controller controls the position of the second rotor (31) in the Z-axis direction.

According to the first aspect, even when the center of gravity (101) of the rotor unit (10) is not located on the line of action (200), the magnetic bearing (3) can move the rotor unit (10) in the Z-axis direction to generate a restoring torque against the inclination of the rotor unit (10).

A second aspect would be realized in combination with the first aspect. In the second aspect, the bearingless motor (1) further includes a second position detector (42) (position detector (4)) configured to detect the position of the rotor unit (10) in the Z-axis direction. The second position detector (42) detects the position of the rotor unit (10) in the Z-axis direction at each of at least three points that are not aligned on a straight line when viewed in the Z-axis direction.

According to the second aspect, the position of the rotor unit (10) in the Z-axis direction and the inclination of the rotor unit (10) with respect to the Z-axis direction can be detected.

A third aspect would be realized in combination with the second aspect. In the third aspect, the second position detector (42) includes an eddy current distance measuring sensor and detects the edge of the rotor unit (10) when viewed in a direction orthogonal to the Z-axis direction.

According to the third aspect, the second position detector (42) can detect not only the position of the rotor unit (10) in the Z-axis direction but also the position of the rotor unit (10) in the radial direction.

A fourth aspect would be realized in combination with any one of the first to third aspects. In the fourth aspect, the bearingless motor (1) further includes a first position detector (41) (position detector (4)) configured to detect a position of the rotor unit (10) in the X-axis direction and a position of the rotor unit (10) in the Y-axis direction. The first position detector (41) detects the position of the rotor unit (10) in a direction orthogonal to the Z-axis direction at each of at least two points that are not diagonal to each other around the Z-axis when viewed in the Z-axis direction.

According to the fourth aspect, the radial position (the position in the X-axis direction and the position in the Y-axis direction) of the rotor unit (10) can be detected.

A fifth aspect would be realized in combination with the fourth aspect. In the fifth aspect, the first position detector (41) includes an eddy current distance measuring sensor and detects an edge of the rotor unit (10) when viewed in the Z-axis direction.

According to the fifth aspect, the first position detector (41) can detect not only the position of the rotor unit (10) in the radial direction but also the position of the rotor unit (10) in the Z-axis direction.

A sixth aspect would be realized in combination with any one of the first to fifth aspects. In the sixth aspect, the magnetic bearing (3) is of an axial gap magnetic bearing.

According to the sixth aspect, a force along the Z-axis direction is easily applied to the rotor unit (10) by the magnetic bearing (3), and the rotor unit (10) is easily moved along the Z-axis direction.

A seventh aspect would be realized in combination with any one of the first to fifth aspects. In the seventh aspect, the magnetic bearing (3) is of a radial gap magnetic bearing.

According to the seventh aspect, both the motor (2) and the magnetic bearing (3) can be of a radial gap magnetic bearing, and the size of the bearingless motor (1) in the radial direction can be reduced.

### Industrial Applicability

The bearingless motor of the present disclosure is likely to actively generate a restoring torque against the inclination of the rotor (rotor unit). As described above, the bearingless motor of the present disclosure is industrially useful.

### REFERENCE MARKS IN THE DRAWINGS

- 1: bearingless motor
- 10: rotor unit
- 100: axis
- 2: motor
- 21: first rotor
- 22: first stator
- 3: magnetic bearing
- 31: second rotor
- 32: second stator
- 4: position detector
- 41: first position detector
- 42: second position detector

## Claims

1. A bearingless motor comprising:
a radial gap motor including a first rotor and a first stator, the first rotor rotating about an axis along a Z-axis direction of an orthogonal coordinate system having an X-axis, a Y-axis, and the Z-axis;
a magnetic bearing including a second rotor and a second stator, the second rotor rotating about the axis;
a first controller configured to control a position of the first rotor in the X-axis direction, a position of the first rotor in the Y-axis direction, an inclination of the first rotor about the X-axis, and an inclination of the first rotor about the Y-axis; and
a second controller configured to control a position of the second rotor in the Z-axis direction,
wherein the first rotor and the second rotor are disposed at different positions in the Z-axis direction and are integrally coupled to each other to constitute a rotor unit.

2. The bearingless motor according to claim 1, further comprising
a position detector configured to detect a position of the rotor unit in the Z-axis direction,
wherein the position detector detects the position of the rotor unit in the Z-axis direction at each of at least three points that are not aligned on a straight line when viewed in the Z-axis direction.

3. The bearingless motor according to claim 2, wherein the position detector includes an eddy current distance measuring sensor and detects an edge of the rotor unit when viewed in a direction orthogonal to the Z-axis direction.

4. The bearingless motor according to claim 1, further comprising
a position detector configured to detect a position of the rotor unit in the X-axis direction and a position of the rotor unit in the Y-axis direction,
wherein the position detector detects a position of the rotor unit in a direction orthogonal to the Z-axis direction at each of at least two points that are not diagonal to each other around the Z-axis when viewed in the Z-axis direction.

5. The bearingless motor according to claim 4, wherein the position detector includes an eddy current distance measuring sensor and detects an edge of the rotor unit when viewed in the Z-axis direction.

6. The bearingless motor according to claim 1, wherein the magnetic bearing is of an axial gap magnetic bearing.

7. The bearingless motor according to claim 1, wherein the magnetic bearing is of a radial gap magnetic bearing.
